(19) **Europäisches Patentamt / European Patent Office / Office européen des brevets**

(11) **EP 3 109 144 B1**

(12) **EUROPÄISCHE PATENTSCHRIFT**

(45) Veröffentlichungstag und Bekanntmachung des Hinweises auf die Patenterteilung:
**02.10.2019 Patentblatt 2019/40**

(51) Int Cl.:
**B62K 25/04** *(2006.01)*     **F16F 9/53** *(2006.01)*
**B62K 25/08** *(2006.01)*     **F16F 9/32** *(2006.01)*

(21) Anmeldenummer: **16170147.9**

(22) Anmeldetag: **18.05.2016**

(54) **FAHRWERKSTEUERUNG FÜR EIN MUSKELBETRIEBENES ZWEIRAD UND VERFAHREN**

CHASSIS CONTROL FOR A MUSCLE- OPERATED BICYCLE AND METHOD

COMMANDE DE CHASSIS POUR UN DEUX-ROUES ENTRAINE PAR LA PUISSANCE MUSCULAIRE ET PROCEDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2015 DE 102015107710**

(43) Veröffentlichungstag der Anmeldung:
**28.12.2016 Patentblatt 2016/52**

(73) Patentinhaber: **DT Swiss AG**
**2504 Biel (CH)**

(72) Erfinder:
• **Walthert, Martin**
  **3270 Aarberg (CH)**
• **Wendel, Valentin**
  **3008 Bern (CH)**

• **Mayer, Markus**
  **6832 Sulz (Vorarlberg) (AT)**
• **Battlogg, Stefan**
  **6771 St. Anton i.M. (AT)**
• **Elsensohn, Gernot**
  **6771 St. Anton i. M. (AT)**
• **Pösel, Jürgen**
  **6700 Bludenz (AT)**

(74) Vertreter: **BSB Patentanwälte**
**Schütte & Engelen Partnerschaft mbB**
**Am Markt 10**
**59302 Oelde (DE)**

(56) Entgegenhaltungen:
**DE-A1-102012 012 532     DE-A1-102013 014 091**

**Beschreibung**

Die vorliegende Erfindung betrifft eine Fahrwerksteuerung und ein Verfahren für ein wenigstens teilweise muskelbetriebenes Zweirad und insbesondere ein Fahrrad mit wenigstens einem steuerbaren Stoßdämpfer.

Die Stoßdämpfung hat einen großen Einfluss auf die Fahreigenschaften und stellt daher ein wichtiges Merkmal von Fahrrädern und insbesondere Sportfahrrädern dar. Stoßdämpfer ermöglichen einen verbesserten Bodenkontakt und erlauben ein sportliches Fahren auch in einem extremen Gelände. Stoßgedämpfte Fahrräder weisen in der Regel eine Federgabel auf, welche häufig durch einen Hinterraddämpfer ergänzt wird. Üblicherweise umfasst ein Stoßdämpfer eine Federeinrichtung, um auftretende Stöße abzufedern und eine Dämpfungseinrichtung, um die Federschwingung zu dämpfen. Bei Stoßdämpfern für das Hinterrad werden die Federeinrichtung und die Dämpfereinrichtung in der Regel als integrale Einheit ausgebildet. Bei Federgabeln können die Dämpfungseinrichtung und die Federeinrichtung des Stoßdämpfers auch separat angeordnet werden.

Um die Vorteile einer Stoßdämpfung optimal ausnutzen zu können, ist in der Regel eine Einstellung der Dämpfungs- und Federeigenschaften unerlässlich. Kriterien für die Einstellung sind dabei beispielsweise das Gewicht des Fahrrads und des Fahrers und dessen Fahrweise sowie die Eigenschaften des Geländes, in dem gefahren werden soll. Bei Fahrten auf glatter Fahrbahn sind andere Dämpfungseigenschaften sinnvoll als bei einer Fahrt durch das Gelände. Um jederzeit optimale Dämpfungseigenschaften zur Verfügung zu stellen, sind elektrisch steuerbare Stoßdämpfer für Fahrräder bekannt geworden, die jederzeit eine bequeme Umstellung der Dämpfungseigenschaften ermöglichen.

Mit der DE 10 2012 012 532 A1 der Anmelderin sind ein Stoßdämpfer und ein Verfahren zum Betreiben eines Stoßdämpfers bekannt geworden, bei dem die Dämpfereinrichtung ein steuerbares Dämpfungsventil mit einer Felderzeugungseinrichtung umfasst, mit der ein feldempfindliches Medium wie ein magnetorheologisches Fluid beeinflussbar ist, um die Dämpfungskraft der Dämpfereinrichtung durch Anlegen einer Feldstärke der Felderzeugungseinrichtung zu beeinflussen. Bei diesem bekannten Stoßdämpfer wird die Dämpfungskraft der Dämpfereinrichtung in Echtzeit eingestellt. Dazu werden Ereignisse in Form von Stößen erkannt und es wird eine Relativgeschwindigkeit der Dämpferenden periodisch erfasst. Zur Dämpfung wird aus der Relativgeschwindigkeit ein Kennwert abgeleitet und mit dem Kennwert wird wiederum eine einzustellende Feldstärke aus einer Dämpferkennlinie abgeleitet. In Echtzeit wird mit der Felderzeugungseinrichtung die einzustellende Feldstärke erzeugt, um die Dämpfungskraft unmittelbar automatisch einzustellen. Mit diesem bekannten Stoßdämpfer kann flexibel auf alle Arten von Stößen eingegangen werden, da nach der Erkennung einer Relativbewegung der Stoßdämpfer direkt eingestellt wird.

Der bekannte Stoßdämpfer funktioniert sehr zuverlässig und schaltet innerhalb weniger Millisekunden um, sodass die Dämpfereinrichtung während des Überfahrens einer Wurzel oder eines Steins kontinuierlich an die gerade vorherrschenden Bedingungen angepasst wird. Während zum Beispiel bei Fahrten auf glatter Fahrbahn der Dämpfer hart eingestellt bleibt, damit nicht unnötig Antriebsenergie in der Dämpfereinrichtung dissipiert wird. Der Stoßdämpfer arbeitet wenigstens im Prinzip sehr zufriedenstellend. Es hat sich aber herausgestellt, dass in manchen Situationen, wenn zum Beispiel die Federgabel manuell langsam eingefedert wird, der Stoßdämpfer nicht weich einfedert, was er bei einer geringen Einfedergeschwindigkeit erlauben sollte, sondern ein kratzendes oder schabendes Feedback an die Hand des Benutzers abgibt. Ein ähnliches kratzendes oder schabendes Gefühl kann der Benutzer manchmal in den auf dem Lenker aufliegenden Handflächen spüren, wenn er eine nahezu ganz glatte Straße entlangfährt. Bei echten Stößen hingegen tritt so etwas nicht auf und der Stoßdämpfer dämpft erwartungsgemäß bei stärkeren und auch bei schwächeren Stößen. Das "Kratzen" oder "Schaben" oder "Rattern" tritt wahrnehmbar bei ganz geringen Belastungen auf. Es kann beim manuellen Einfedern der Eindruck entstehen, dass der Stoßdämpfer nicht schnell genug reagiert und während des Eindämpfens ein periodischer Übergang von sehr kurzem aktiven Blockieren und Loslassen und somit "kratzendem" Einfedern erfolgt. Die resultierende Resonanz ist für den Benutzer spürbar. Die Stoßdämpfer am Hinterrad oder auch am Vorderrad (Federgabel) federn bei solchen langsam herbeigeführten Einfedervorgängen nicht so weich ein, wie es sein sollte.

Zur Abhilfe wurden die Messdaten gefiltert, was aber zu einem erheblichen Zeitverzug bei der Reaktion des Stoßdämpfers führte, wodurch Stöße zu spät und große Stöße nicht rechtzeitig abgefedert wurden. Um einen Zeitverzug bei der Reaktion des Stoßdämpfers auszuschließen, wurde die Messfrequenz erhöht, um aufgrund einer schnelleren Abfolge der Messwerte jederzeit die richtige Reaktion des Stoßdämpfers und somit einen weicheren Übergang in allen Bereichen zu erhalten. Aber auch eine Erhöhung der Messfrequenz brachte keine Verbesserung des Ein- und Ausfederungsverhaltens. Und das, obwohl der Stoßdämpfer innerhalb von wenigen Millisekunden einstellbar ist.

Ein im Wesentlichen gattungsbildendes Verfahren zum Betreiben eines Stoßdämpfers ist zudem durch die DE 10 2013 014 091 A1 bekannt geworden.

Es ist deshalb die Aufgabe der vorliegenden Erfindung eine Fahrwerksteuerung zur Verfügung zu stellen, mit welcher ein besseres Ansprechverhalten eines steuerbaren Stoßdämpfers ermöglicht wird.

Diese Aufgabe wird durch eine Fahrwerksteuerung mit den Merkmalen des Anspruchs 1 und durch ein Verfahren zur Steuerung eines Fahrwerks eines Zweirads mit den Merkmalen des Anspruchs 5 gelöst. Bevorzugte Weiterbildungen sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Fahrwerksteuerung für ein wenigstens teilweise muskelbetriebenes Zweirad weist wenigstens einen steuerbaren Stoßdämpfer und wenigstens eine Steuereinrichtung und wenigstens eine Speichereinrichtung auf. Der Stoßdämpfer umfasst zwei relativ zueinander bewegbare Anschlusseinheiten, wobei wenigstens eine Sensoreinrichtung zur Erfassung von Messdatensätzen wenigstens über eine Relativbewegung der Anschlusseinheiten zueinander vorgesehen ist. Die Sensoreinrichtung ist zur Erfassung eines Wegsignals bei der Relativbewegung der Anschlusseinheiten zueinander mit einer Auflösung besser als 100 μm ausgebildet. Die Sensoreinrichtung ist zur Erfassung des Wegsignals mit einer Frequenz größer 1 kHz ausgebildet. Es ist eine Mehrzahl von Messdatensätzen in der Speichereinrichtung hinterlegbar. Zur Aufbereitung der Messdatensätze ist eine Filtereinrichtung vorgesehen. Die Filtereinrichtung kann auch weitere Datensätze verarbeiten und zur Aufbereitung der Messdatensätze verwenden. Jedenfalls verarbeitet die Filtereinrichtung zur Aufbereitung auch Messdatensätze. Es wird wenigstens ein aus einem mit der Sensoreinrichtung bei der Relativbewegung der relativ zueinander bewegbaren Anschlusseinheiten erfassten Messdatensatz abgeleiteter Datensatz in der Speichereinrichtung hinterlegt. Es ist eine Analyseeinrichtung vorgesehen, welche dazu ausgebildet und eingerichtet ist, wenigstens einen hinterlegten abgeleiteten Datensatz zu analysieren. Dabei ist in der Speichereinrichtung eine Mehrzahl an Filterparametersätzen hinterlegt. Die Steuereinrichtung ist dazu ausgebildet und eingerichtet, in Abhängigkeit von dem Ergebnis der Analyse einen Filterparametersatz aus der Mehrzahl an Filterparametersätzen zu bestimmen und mit dem bestimmten Filterparametersatz aus dem hinterlegten Messdatensatz einen Steuerdatensatz abzuleiten, sodass die Steuereinrichtung den Stoßdämpfer wenigstens auch mit dem Steuerdatensatz steuert.

Die erfindungsgemäße Fahrwerksteuerung hat viele Vorteile. Ein erheblicher Vorteil der erfindungsgemäßen Fahrwerksteuerung besteht darin, dass mit der Analyseeinrichtung die erfassten Messdatensätze analysiert werden, sodass in Abhängigkeit von dem Ergebnis der Analyse ein Filterparametersatz ermittelt wird, mit dem aus dem Messdatensatz ein Steuerdatensatz abgeleitet wird. Dadurch wird durch Analyse der Messdatensätze der Relativbewegung der relativ zueinander bewegbaren Anschlusseinheiten jeweils ein geeigneter Filterparametersatz ermittelt, um ein schnelles und in allen Situationen ausreichend weiches Ansprechverhalten des Stoßdämpfers zu gewährleisten.

Unter dem Begriff Datensatz wird im Sinne der vorliegenden Erfindung ein Datensatz mit wenigstens einem darin enthaltenen Wert oder Messwert verstanden. Es ist auch möglich und bevorzugt, dass ein Datensatz mehrere unterschiedliche Werte oder Parameter enthält. So kann ein Messdatensatz beispielsweise eine Weginformation und eine Geschwindigkeitsinformation und auch eine Beschleunigungsinformation und dergleichen mehr enthalten. Möglich ist es aber auch, dass ein Messdatensatz nur einen einzigen gemessenen Wert enthält. Das Gleiche gilt auch für einen abgeleiteten Datensatz, der in der Speichereinrichtung hinterlegt wird und auch für einen Steuerdatensatz, der aus dem hinterlegten Datensatz und/oder dem Messdatensatz ermittelt wird. In ähnlicher Weise kann ein Filterparametersatz einen oder mehrere Filterparameter enthalten. Vorzugsweise umfasst ein Parametersatz mehrere Parameter. Es ist aber auch möglich, dass ein Parametersatz nur einen Parameter enthält.

Ein abgeleiteter Datensatz, der in der Speichereinrichtung hinterlegt wird, wird im Folgenden auch als "hinterlegter Datensatz" bezeichnet. Der abgeleitete und hinterlegte Datensatz kann identisch zu dem zugehörigen Messdatensatz sein oder wird durch Aufbereitung daraus gewonnen. Beispielsweise kann eine Normierung durchgeführt werden.

Insbesondere ist die Steuereinrichtung dazu ausgebildet und eingerichtet, wenigstens einen hinterlegten Datensatz zu analysieren und in Abhängigkeit von dem Ergebnis der Analyse einen Filterparametersatz aus einer Mehrzahl von Filterparametersätzen zu bestimmen und mit dem ermittelten Filterparametersatz aus dem Messdatensatz einen Steuerdatensatz abzuleiten. Insbesondere filtert die Filtereinrichtung Messdaten dann weniger intensiv, wenn eine intensivere Relativbewegung der Anschlusseinheiten zueinander vorliegt. Unter einer intensiveren Relativbewegung wird eine schnellere Relativbewegung oder eine schnellere Beschleunigung relativ zueinander oder gegebenenfalls auch eine absolute Geschwindigkeit oder Beschleunigung verstanden. Bei einer weniger intensiven Relativbewegung der Anschlusseinheiten zueinander wird hingegen intensiver gefiltert. Das bedeutet, dass die Messdaten bzw. der Wert oder die Werte eines Messdatensatzes stärker entrauscht werden. Dadurch kann ein glatterer zeitlicher Ablauf zur Verfügung gestellt werden.

Die Steuereinrichtung steuert den Stoßdämpfer mittelbar oder unmittelbar unter Verwendung weiterer Komponenten, wie einer (Leistungs-)Elektronik und insbesondere unter Verwendung einer Magnetfelderzeugungseinrichtung. Jedenfalls wird eine Einstellung der Dämpfung des Stoßdämpfers mit dem Steuerdatensatz bewirkt.

Aus den Messdatensätzen werden durch Aufbereitung und/oder durch Vorfilterung und/oder durch Filterung aufbereitete Datensätze erhalten, die vorzugsweise der weiteren Verarbeitung zugrunde gelegt werden. Die Filtereinrichtung kann Teil der Steuereinrichtung sein

Die Messung der Messdatensätze erfolgt vorzugsweise mit einer Frequenz, die größer als 200 Hz oder 500 Hz und insbesondere größer 1 kHz beträgt. In der Speichereinrichtung können sowohl der aktuelle Messdatensatz als auch wenigstens ein vorangegangener Messdatensatz bzw. wenigstens der aktuelle abgeleitete Datensatz und/oder ein zuvor abgeleiteter Datensatz hinterlegt werden. Möglich und bevorzugt ist es auch, dass der jeweils aktuelle Steuerdatensatz in der Speichereinrichtung gespeichert wird.

Für die jeweilige Aufbereitung der Messdaten ergeben sich unterschiedliche Optionen. Bei einem ersten Durchlauf wird vorzugsweise ein voreingestellter Filterparametersatz geladen und es wird wenigstens ein erster Messdatensatz aufgenommen. Zunächst wird ein Steuerdatensatz mit dem voreingestellten Filterparametersatz aus dem Messdatensatz abgeleitet.

Danach wird gemäß einer ersten Variante in einer Schleife ein neuer bzw. aktueller Messdatensatz aufgenommen. Anschließend wird über den vorausgegangenen Steuerdatensatz ein Filterparametersatz gewählt oder abgeleitet. Mit dem derartig bestimmten Filterparametersatz wird ein aktueller Steuerdatensatz abgeleitet. Die Dämpfung des Stoßdämpfers wird unter Berücksichtigung dieses Steuerdatensatzes oder mit diesem Steuerdatensatz eingestellt.

Beim nächsten Schleifendurchlauf wird der zuvor noch aktuelle Messdatensatz zu dem vorherigen Messdatensatz. Es wird der aktuelle Messdatensatz aufgenommen. Über den Steuerdatensatz einer vorgehenden Schleife und insbesondere der letzten Schleife wird ein Filterparametersatz ausgewählt und es wird mit dem aktuellen Messdatensatz und dem ausgewählten Filterparametersatz ein aktueller Steuerdatensatz abgeleitet, mit Hilfe dessen anschließend die Dämpfung eingestellt wird.

In einem alternativen Verfahren kann nach dem ersten Durchlauf eine andere Schleife durchgeführt werden. Dabei wird zunächst ebenfalls ein aktueller Messdatensatz aufgenommen. Über den aktuellen Messdatensatz wird ein Filterparametersatz ausgewählt aus dem aktuellen Messdatensatz wird mit dem ausgewählten Filterparametersatz ein aktueller Steuerdatensatz abgeleitet. Danach erfolgt die Einstellung der Dämpfung unter Berücksichtigung des aktuellen Steuerdatensatzes. Eventuell kann die Ermittlung des Filterparametersatzes auch iterativ erfolgen. Dabei wird ein erneuter Teilschleifendurchlauf zur Ermittlung des Filterparametersatzes durchgeführt, falls der aktuell ermittelte Steuerdatensatz von dem vorhergehenden Steuerdatensatz um ein bestimmtes Maß abweicht oder wenn der Steuerdatensatz bzw. die darin enthaltenden Werte bestimmte Grenzen unter- oder überschreiten.

Weiterhin ist noch eine weitere Variante der Schleife möglich, wonach zunächst ein aktueller Messdatensatz aufgenommen wird und mit dem aktuellen Messdatensatz unter Verwendung des vorhergehenden Filterparametersatzes ein aktueller Steuerdatensatz abgeleitet wird. Anhand des Steuerdatensatzes wird anschließend überprüft, ob der richtige Filterparametersatz gewählt wurde. Eventuell wird der Filterparametersatz neu ausgewählt und erneut ein neuer Steuerdatensatz bzw. aktueller Steuerdatensatz abgeleitet. Auch hier kann wiederum eine Überprüfung erfolgen, ob der korrekte Filterparametersatz ausgewählt wurde. Diese Iterationsschleife kann beliebig häufig durchgeführt werden. Vorzugsweise wird die Iterationsschleife in ihrer Anzahl begrenzt, um eine dauerhafte Schleife zu vermeiden. Mit dem aktuellen Steuerdatensatz wird schließlich die Dämpfung eingestellt.

In einer bevorzugten Weiterbildung ist in der Speichereinrichtung eine Mehrzahl an Filterparametersätzen hinterlegt und in Abhängigkeit von dem wenigstens einen hinterlegten Datensatz ist ein Filterparametersatz auswählbar.

Der hinterlegte Datensatz kann in allen Fällen der Messdatensatz sein, so wie er aufgenommen wird. Möglich ist es aber auch, dass mit der Sensoreinrichtung der erfasste Messdatensatz in einem ersten Aufbereitungsschritt aufbereitet wird, um zum Beispiel standardisierte Werte zu erhalten und anschließend den so ermittelten Datensatz in der Speichereinrichtung zu hinterlegen. Vorzugsweise wird eine Mehrzahl von miteinander gemessenen und aufbereiteten Datensätzen in der Speichereinrichtung hinterlegt. Je nach Speicherfähigkeit kann ein FIFO-Verfahren gewählt werden, sodass eine Anzahl der letzten Messdatensätze jeweils in der Speichereinrichtung verbleibt.

In besonders bevorzugten Weiterbildungen umfasst die Analyseeinrichtung eine Vergleichseinrichtung und die Vergleichseinrichtung vergleicht einen hinterlegten Datensatz mit Vergleichsdaten und wählt in Abhängigkeit von dem Ergebnis des Vergleichs einen in der Speichereinrichtung abgelegten Filterparametersatz aus oder leitet ein Filterparametersatz ab und leitet aus dem Messdatensatz mit dem Filterparametersatz einen Steuerdatensatz ab. Eine solche Ausgestaltung ist sehr vorteilhaft, da ohne aufwendige Rechenoperationen sehr genaue Ergebnisse erzielbar sind.

In Abhängigkeit von dem wenigstens einen hinterlegten Datensatz ist vorzugsweise ein Filterparametersatz auswählbar. Das bedeutet, dass ein Filterparametersatz in Abhängigkeit von dem Inhalt wenigstens eines hinterlegten Datensatz auswählbar ist. Dementsprechend kann mit der Vergleichseinrichtung ein Inhalt eines hinterlegten Datensatzes mit Vergleichsdaten verglichen werden.

In allen Ausgestaltungen ist es bevorzugt, dass eine Mehrzahl von Datensätzen in der Speichereinrichtung hinterlegbar ist. Dazu zählen neben den originalen Messdatensätzen auch die daraus abgeleiteten und in der Speichereinrichtung hinterlegten Datensätze sowie die in der Speichereinrichtung speicherbaren Steuerdatensätze und gegebenenfalls dergleichen mehr.

Besonders bevorzugt ist die Sensoreinrichtung dazu ausgebildet, wenigstens ein Wegsignal zu erfassen. In vorteilhaften Weiterbildungen ist die Steuereinrichtung dazu ausgebildet, aus einem Sensorsignal der Sensoreinrichtung ein Geschwindigkeitssignal für eine Relativbewegung der Anschlusseinheiten abzuleiten. Dazu ist eine Recheneinheit vorgesehen, die Teil der Steuereinrichtung sein kann. Vorzugsweise ist die Steuereinrichtung dazu ausgebildet, aus einem Sensorsignal der Sensoreinrichtung auch ein Beschleunigungssignal abzuleiten. Insbesondere ist die Steuereinrichtung dazu ausgebildet und eingerichtet aus einem Sensorsignal ein Beschleunigungssignal in der geforderten Güte abzuleiten. Dazu bestimmt die Steuereinrichtung in einer Frequenz von vorzugsweise größer 1 kHz aus dem Sensorsignal das Beschleunigungssignal. Zur Berechnung des Beschleunigungssignals ist vorzugsweise ebenfalls eine Recheneinheit vorgesehen, die auch Teil der Steuereinrichtung sein kann. Zur Berechnung des Beschleunigungssignals und des Geschwindigkeitssignals kann dieselbe Recheneinheit verwendet werden.

Vorzugsweise ist die Steuereinrichtung dazu ausgebildet, aus einem Sensorsignal der Sensoreinrichtung ein Geschwindigkeitssignal und ein Beschleunigungssignal für eine Relativbewegung der Anschlusseinheiten abzuleiten. Insbesondere wird dazu das Wegsignal der Sensoreinrichtung eingesetzt.

Vorzugsweise ist die Steuereinrichtung dazu ausgebildet, bei betragsmäßig geringen Geschwindigkeitssignalen und Beschleunigungssignalen einen Filterparametersatz mit stärkerer Filterung auszuwählen. Vorzugsweise ist die Steuereinrichtung dazu ausgebildet, bei betragsmäßig größeren Geschwindigkeitssignalen oder Beschleunigungssignalen einen Filterparametersatz mit geringerer Filterung auszuwählen. Das bedeutet, dass ein Filterparametersatz mit stärkerer Filterung ausgewählt wird, wenn das Geschwindigkeitssignal und das Beschleunigungssignal klein sind. Eine Filterparametersatz mit geringerer Filterung wird ausgewählt, wenn auch nur eines von beiden Signalen, nämlich Geschwindigkeitssignal und Beschleunigungssignal größer ist. Dadurch wird eine sehr schnelle Reaktion bei Stößen gewährleistet, während bei geringen Signalen ein stärkere Glättung erfolgt. Es wird aber verhindert, dass beim Auftreten eines starken Stoßes darauf erst (zu) spät reagiert wird. Dadurch wird das "Rattern" oder "Kratzen" sehr zuverlässig vermieden.

Ein solches Rattern tritt, wie sich herausgestellt hat, insbesondere dann auf, wenn das Geschwindigkeitssignal unter 10% und eher unter 5% des im Betrieb typischen maximalen Geschwindigkeitssignals beträgt. Wenn bei einem kräftigen Stoß das maximal auftretende Geschwindigkeitssignal z. B. etwa 0,5 m/s oder 1 m/s beträgt, so kann ein "Kratzen" insbesondere bei Geschwindigkeitssignalen von bis zu 0,05 oder 0,02 m/s auftreten. Hier wird nun bei unter einer vorbestimmten Grenze liegenden Geschwindigkeitssignalen stärker gefiltert, sodass stärker entrauscht wird. Bei darüber liegenden Geschwindigkeitssignalen wird hingegen weniger stark oder gar nicht gefiltert. Werden allerdings relativ große Beschleunigungssignale oberhalb einer vorbestimmten Grenze ermittelt, wird das Geschwindigkeitssignal auch bei geringer Absolutgröße weniger intensiv gefiltert. Durch diese Kombination wird ein optimales Ergebnis erreicht. Bei starken Signalen wird wenig (oder gar nicht) gefiltert, sodass das Geschwindigkeitssignal (fast) direkt zur Einstellung der Dämpfung eingesetzt wird. Das ist vorteilhaft, da bei einer solchen Echtzeitdämpfung (bei "echten" Stößen) jeder Zeitverzug nachteilig sein kann. Bei geringen Stößen oder Vibrationen, die kleine Geschwindigkeitssignale und Beschleunigungssignale erzeugen, wird stärker gefiltert und insbesondere geglättet. Ein Zeitverzug spielt bei geringen Belastungen keine besondere Rolle.

Vorteilhafterweise ist die Sensoreinrichtung dazu geeignet und ausgebildet, das Wegsignal mit einer Auflösung von besser als 100 $\mu$m zu erfassen. Die Auflösung des Wegsignals kann auch besser als 50 $\mu$m oder besser als 30 $\mu$m und vorzugsweise besser als 10 $\mu$m sein. Mit einer Sensoreinrichtung, die Wegsignale mit einer sehr hohen Auflösung erfasst, kann eine sehr genaue Steuerung des Fahrwerks erfolgen.

Insbesondere ist die Sensoreinrichtung dazu geeignet und ausgebildet, das Sensorsignal mit einer Messfrequenz von wenigstens 500Hz oder wenigstens 1 kHz zu erfassen. Dabei kann die Messfrequenz auch 5 kHz erreichen oder überschreiten.

In besonders bevorzugten Weiterbildungen umfasst die Dämpfereinrichtung eine erste Dämpferkammer und wenigstens eine zweite Dämpferkammer. Dabei sind die erste Dämpferkammer und die zweite Dämpferkammer über wenigstens ein insbesondere steuerbares Dämpfungsventil miteinander gekoppelt. Besonders bevorzugt ist dem wenigstens einen Dämpfungsventil oder wenigstens einem Dämpfungsventil wenigstens eine Magnetfelderzeugungseinrichtung zugeordnet, welche zur Erzeugung und Steuerung eines Magnetfeldes in wenigstens ein Dämpfungskanal des Dämpfungsventils dient. Besonders bevorzugt ist in dem Dämpfungskanal wenigstens ein magnetorheologisches Medium vorgesehen. Durch ein magnetorheologisches Medium in dem Dämpfungskanal kann über eine Ansteuerung der Magnetfelderzeugungseinrichtung wenigstens eine Eigenschaft des Stoßdämpfers individuell und schnell eingestellt werden. Innerhalb weniger Millisekunden kann eine vollständige Neueinstellung der Dämpferkraft der Dämpfereinrichtung bzw. des Stoßdämpfers erfolgen.

Das erfindungsgemäße Verfahren dient zur Steuerung wenigstens eines Teils eines Fahrwerks eines wenigstens teilweise muskelbetriebenen Zweirads und weist wenigstens eine Steuereinrichtung und wenigstens eine Speichereinrichtung und wenigstens einen steuerbaren Stoßdämpfer auf. Der steuerbare Stoßdämpfer umfasst zwei relativ zueinander bewegbare Anschlusseinheiten. Die Sensoreinrichtung erfasst ein Wegsignals mit einer Auflösung besser als 100 $\mu$m und mit einer Frequenz größer 1 kHz. Es werden Messdatensätze über eine Relativbewegung der Anschlusseinheiten zueinander erfasst und mit einer Filtereinrichtung aufbereitet. Dabei wird aus einem erfassten Messdatensatz ein Datensatz abgeleitet und in einer Speichereinrichtung hinterlegt. Es wird eine Mehrzahl von Datensätzen in der Speichereinrichtung hinterlegt. Wenigstens ein hinterlegter abgeleiteter Datensatz wird analysiert und in Abhängigkeit von dem Ergebnis der Analyse wird ein Filterparametersatz aus einer Mehrzahl von in der Speichereinrichtung hinterlegten Filterparametersätzen bestimmt und mit dem bestimmten Filterparametersatz wird aus dem Messdatensatz ein Steuerdatensatz abgeleitet, sodass unter Verwendung des Steuerdatensatzes oder mit dem Steuerdatensatz der Stoßdämpfer gesteuert wird.

Auch das erfindungsgemäße Verfahren bietet viele Vorteile, da es eine in Abhängigkeit von der Analyse der Messdaten angepasste Aufbereitung vornimmt, wodurch jederzeit geeignete Dämpfungsparameter eingestellt werden.

In bevorzugten Weiterbildungen werden aus dem Messdatensatz wenigstens ein Geschwindigkeitssignal bzw. Geschwindigkeitsdaten abgeleitet. Ebenso können aus dem Messdatensatz wenigstens ein Beschleunigungssignal bzw. Beschleunigungsdaten abgeleitet werden.

In bevorzugten Weiterbildungen wird ein Messdatensatz bzw. wenigstens ein Wert eines Messdatensatzes dann stärker gefiltert, wenn der Betrag des jeweiligen Wertes des Messdatensatzes kleiner ist und stärker gefiltert, wenn der Betrag des Wertes bzw. der Werte des Messdatensatzes größer ist. Zur Unterscheidung, ob eine stärkere oder schwächere Filterung durchgeführt wird, können Schwellenwerte oder es kann ein Grenzwertsatz vorgesehen sein. Die Werte des Messdatensatzes können Wegwerte, Beschleunigungswerte und/oder Geschwindigkeitswerte enthalten. Unter einem Filtern kann auch ein Glätten der Werte verstanden werden. Unter dem Begriff "Betrag der Werte" wird der mathematische Betrag - also vorzeichenlos - verstanden.

Insbesondere wird bei geringen Geschwindigkeiten der Relativbewegung stärker gefiltert als bei hohen Geschwindigkeiten dabei wird insbesondere das Geschwindigkeitssignal berücksichtigt, um zu entscheiden, ob stärker gefiltert oder schwächer gefiltert wird.

Ebenso ist es bevorzugt, dass bei geringen Beschleunigungen der Relativbewegung stärker gefiltert wird als bei hohen Beschleunigungen bzw. hohen Beschleunigungssignalen.

Unter dem Begriff "stärker" filtern wird hier ein intensiveres Filtern verstanden. Das bedeutet, dass stärker gefilterte Messdaten intensiver entrauscht werden. Das kann zum Beispiel dadurch erfolgen, dass eine größere Anzahl vorangegangener Messdaten berücksichtigt wird oder indem vorangegangene Messdaten mit einer höheren Gewichtung berücksichtigt werden. Eine stärkere Filterung führt zu einer stärkeren Glättung als eine schwächere Filterung. Das führt zu einer geringeren Grenzfrequenz. Kanten werden bei einer stärkeren Filterung runder als bei einer schwächeren Filterung, bei der die Grenzfrequenz höher ist. Eine stärkere Filterung führt insbesondere zu einem stärkeren Entrauschen (engl. denoising) als eine schwächere Filterung. Besonders bevorzugt werden Geschwindigkeitssignale und Beschleunigungssignale berücksichtigt, um zu entscheiden, wie stark gefiltert wird. Wenn das Geschwindigkeitssignal eine vorbestimmte Geschwindigkeitsgrenze oder wenn das Beschleunigungssignal eine vorbestimmte Beschleunigungsgrenze überschreitet, wird schwächer gefiltert, als wenn das Geschwindigkeitssignal und das Beschleunigungssignal kleiner als die jeweilige Grenze sind.

Es hat sich herausgestellt, dass bei hohen Geschwindigkeiten und/oder hohen Beschleunigungen eine wesentlich schwächere Aufbereitung erforderlich ist als bei geringen Beschleunigungen oder geringen Geschwindigkeiten. Bei hohen Beschleunigungen und/oder Geschwindigkeiten, die bei dem Überfahren von Hindernissen auftreten, reicht eine geringe Filterung oder Glättung aus oder es kann vollständig darauf verzichtet werden. Bei kleinen oder kleinsten Stößen treten hingegen meist nur eine geringe Beschleunigung und eine geringe Relativgeschwindigkeit zwischen den Anschlusseinheiten des Stoßdämpfers auf. In Verbindung mit einer begrenzten Orts- und Geschwindigkeitsauflösung und der Digitalisierung (d. h. der Zeitdiskretisierung und der Wertdiskretisierung) des Messergebnisses ergibt sich hier schon durch das Prinzip bedingt ein Rauschen, wodurch die Messwerte ohne weitere Aufbereitung nicht immer zu einer zufriedenstellenden Betriebsweise des Stoßdämpfers führen. Eine Erhöhung der Messfrequenz führt dann sogar noch zu einer Vergrößerung des Rauschens, da bei höheren Messfrequenzen zwischen einzelnen Messungen jeweils noch kleinere Wertveränderungen ermittelt werden. Deshalb führt eine beliebige Erhöhung der Messfrequenz nicht zu einer Verbesserung des Messergebnisses, sondern kann kontraproduktiv sein, jedenfalls, wenn die Auflösung der Sensoreinrichtung nicht entsprechend mit vergrößert wird.

Da die Erfindung eine Fahrwerksteuerung und ein Verfahren für ein wenigstens teilweise muskelbetriebenes Zweirad und insbesondere ein Fahrrad mit wenigstens einem steuerbaren Stoßdämpfer betrifft, bei dem die Steuerung des Fahrwerks insbesondere in Echtzeit erfolgt, muss die Messfrequenz so hoch sein, dass jederzeit ausreichend schnell auf alle zu erwartenden Ereignisse reagiert werden kann. So muss eine Dämpfereinrichtung beim Auftreten eines Stoßes beim Überfahren zum Beispiel einer Wurzel oder bei einem Sprung so schnell reagieren und die passende Dämpfereinstellung vornehmen, dass jeweils optimale oder doch wenigstens ausreichende Dämpfungseigenschaften vorliegen. Derartige Zeiterfordernisse bestehen bei Kraftfahrzeugen heute regelmäßig nicht, da dort kein Stoß in Echtzeit gedämpft wird, sondern nur die generelle Dämpfereinstellung geändert wird. Hier wird die Dämpfereinstellung während eines Stoßes vielfach angepasst, um jeweils optimale Dämpfereinstellungen zu haben. Deshalb müssen die Messfrequenz und die Reglerfrequenz der Steuereinrichtung entsprechend hoch sein, um das Konzept bei hoher Dynamik umzusetzen.

Vorzugsweise werden wenigstens mehrere nacheinander erfasste Datensätze in der Speichereinrichtung gespeichert. Dadurch kann zur Aufbereitung des aktuellen Messdatensatzes auf mehrere zuvor erfasste Datensätze zurückgegriffen werden. Das ermöglicht beispielsweise eine gleitende Glättung der Messdaten über mehrere Datensätze hinweg, z. B. über 2, 3, 4, 5, 6, 8 oder 10 Datensätze hinweg. Dadurch werden eine deutliche Reduzierung des digitalen Rauschens und des Rauschens als Ganzes erzielt.

Bei besonders hohen Messfrequenzen (z. B. 20 kHz oder 50 kHz oder 100 kHz oder mehr) kann auch eine Mittelung von einer gewissen Anzahl von Messungen durchgeführt werden und der Mittelwert von mehreren (z. B. 2, 3 oder 5 oder 10) Messungen wird als Messdatensatz ausgegeben. Ein solches "Oversampling" kann sowohl hardware- als auch softwareseitig durchgeführt werden. Wichtig ist, dass die Rate der Ausgabe der Messdatensätze ausreichend schnell ist.

Vorzugsweise hängt eine Stärke oder Intensität der Glättung von dem hinterlegten Datensatz ab. Insbesondere hängt eine Stärkung der Glättung von dem aktuellen Datensatz ab. Dabei ist es möglich und bevorzugt, dass beispielsweise bei einer gleitenden Mittelung die Anzahl der für die Mittelung herangezogenen Datensätze variiert wird. Wird beispielsweise eine stärkere Filterung gewünscht, so kann die Glättung über entsprechend mehr nacheinander aufgenommene Datensätze durchgeführt werden, während bei einer schwächeren Filterung eine entsprechend geringere Anzahl von Datensätzen zur Mittelung berücksichtigt wird.

Möglich und bevorzugt ist es auch, dass die Anteilsfaktoren für eine gleitende Mittelung in Abhängigkeit von der Stärke der gewünschten Filterung variiert werden. Bei einer stärkeren Filterung können beispielsweise benachbarte oder vorausgegangene Messwerte mit der gleichen Gewichtung oder einer ähnlichen Gewichtung berücksichtigt werden wie der aktuelle Messwert. Beispielsweise können für eine stärkere Filterung der aktuelle Messwert und die vorangegangenen 4 Werte (10 Werte) zu jeweils 20% (10%) berücksichtigt werden. Bei einer schwächeren Filterung können hingegen (weniger Messwerte und) zeitlich weiter beabstandete Messwerte mit einem geringeren Anteilsfaktor berücksichtigt werden. Beispielsweise kann bei einer schwächeren Filterung der aktuelle Messwert mit 75% und der vorangegangene Messwert mit 25% berücksichtigt werden. Oder es werden der aktuelle Messwert und der davor jeweils zu 50 % berücksichtigt, während bei einer stärkeren Filterung der aktuelle Messwert und die beiden Messwerte davor jeweils mit gleicher Gewichtung (33%) berücksichtigt werden.

Neben einer Filterung über gleitende Mittelwerte können auch IIR-Filter ((engl. Infinite Impulse Response) oder FIR-Filter (engl. Finite Impulse Response) oder andere Filter eingesetzt werden. Bevorzugt ist auch der Einsatz eines Kalman-Filters, wobei sich dann mit der Stärke der Filterung wenigstens ein Parameter des Kalman-Filters variiert wird.

In allen Ausgestaltungen ist es besonders bevorzugt, wenn mit der Sensoreinrichtung Messdatensätze mit einer Messfrequenz größer 250 Hz (insbesondere 500 Hz und vorzugsweise 1 kHz) erfasst und/oder die Steuereinrichtung Steuerdatensätze mit einer Steuerfrequenz größer 250 Hz (insbesondere 500 Hz und vorzugsweise 1 kHz) ermittelt. Vorzugsweise wird der Stoßdämpfer wenigstens zeitweise mit wenigstens dieser Steuerfrequenz von 250 Hz (insbesondere 500 Hz und vorzugsweise 1 kHz) angesteuert. Besonders bevorzugt sind die Messfrequenz und die Steuerfrequenz jeweils >2 kHz. Vorzugsweise sind die Messfrequenz und/oder die Steuerfrequenz größer als 5 kHz.

Besonders bevorzugt erfasst die Sensoreinrichtung Wegsignale mit einer Auflösung kleiner 100 $\mu$m oder kleiner als 50 $\mu$m. Vorzugsweise wird eine Auflösung kleiner als 30 $\mu$m und besonders bevorzugt kleiner als 10 $\mu$m erreicht. Dadurch können hoch aufgelöste Relativbewegungen ermittelt werden, wodurch die Genauigkeit steigt.

In allen Ausgestaltungen ist es besonders bevorzugt, wenn die Messfrequenz und die Steuerfrequenz wenigstens zeitweise größer als 8 kHz und die Auflösung der Wegsignale wenigstens zeitweise kleiner als 10 $\mu$ oder 5 $\mu$m beträgt. Dabei ist es besonders bevorzugt, wenn die Messfrequenz kleiner als 50 kHz beträgt und vorzugsweise kleiner als 20 kHz beträgt oder wenn die Ausgabe von Messdatensätzen mit einer Frequenz kleiner als 50 kHz und vorzugsweise kleiner als 20 kHz erfolgt.

Es ist auch möglich und bevorzugt, dass die Messfrequenz und die Steuerfrequenz unterschiedlich sind. Vorzugsweise ist die Messfrequenz größer als die Steuerfrequenz. Die Steuerfrequenz ist vorzugsweise größer 50 Hz und insbesondere größer 100 Hz und vorzugsweise größer 250 Hz oder größer 500 Hz. Die Messfrequenz ist insbesondere größer 250 Hz und vorzugsweise größer 500 Hz und besonders bevorzugt größer 1 kHz. Ein Verhältnis von Messfrequenz zu Steuerfrequenz kann größer 2 und insbesondere größer 4 und vorzugsweise größer 8 oder 16 sein.

Insgesamt stellt die Erfindung ein vorteilhaftes Verfahren und eine vorteilhafte Fahrwerksteuerung zur Verfügung, womit in allen Lastbereichen ein angepasstes und jeweils glattes Ansprechverhalten ermöglicht wird. Überraschenderweise hat nicht eine Erhöhung der Messfrequenz das gewünschte Resultat gebracht, sondern eine Analyse der jeweiligen Messwerte und eine in Abhängigkeit von den jeweiligen Messwerten durchgeführte Filterung. Es hat sich nämlich herausgestellt, dass die Messwertaufnahme zuvor nicht zu langsam war, sondern bei geringen Dämpfergeschwindigkeiten eher zu schnell, da auch aufgrund des zwangsläufig auftretenden Rauschens, welches wenigstens zum Teil auch durch Digitalisierungseffekte bewirkt wird, mit zunehmender Messfrequenz bei geringen Änderungsgeschwindigkeiten der Messgrößen die relativen Fehler zunehmen, weshalb der Stoßdämpfer aufgrund seiner hohen Reaktionsgeschwindigkeit die rauschbehafteten Werte zu schnell einstellte. Bei besonders starken Stößen ändern sich hingegen die Messwerte von einem Schritt zum nächsten mit einer solchen Geschwindigkeit, dass durch die Digitalisierung keine nennenswerten Fehler eingebracht werden.

Als vorteilhaft hat sich auch eine Erhöhung der Messgenauigkeit und/oder der Messauflösung herausgestellt. Besonders vorteilhaft sind eine aufeinander abgestimmte Anpassung von Messauflösung und Messfrequenz und eine Filterung der Messdaten nach Analyse der Messdaten. Dabei erfolgt die Auswertung in Echtzeit.

Weitere Vorteile und Merkmale der vorliegenden Erfindung ergeben sich aus den Ausführungsbeispielen, welche mit Bezug auf die beiliegenden Figuren erläutert werden.

In den Figuren zeigen:

Fig. 1       eine schematische Darstellung eines Fahrrads mit einer erfindungsgemäßen Fahrwerksteuerung;

Fig. 2       eine schematische Darstellung der Fahrwerksteuerung;

Fig. 3a       eine schematische Ansicht einer Federgabel des Fahrrads nach Figur 1;

Fig. 3b       eine schematische geschnittene Ansicht eines Stoßdämpfers für das Hinterrad des Fahrrads nach Figur 1;

Fig. 4       eine schematische geschnittene Darstellung eines weiteren Stoßdämpfers für das Fahrrad nach Figur 1;

Fig. 5       die Sensoreinrichtung des Stoßdämpfers nach Figur 3a in einer vergrößerten Darstellung;

Fig. 6       eine alternative Sensoreinrichtung für die Stoßdämpfer des Fahrrads nach Figur 1;

Fig. 7       eine weitere Sensoreinrichtung für die Stoßdämpfer des Fahrrads nach Figur 1;

Fig. 8       noch eine Sensoreinrichtung für die Stoßdämpfer des Fahrrads nach Figur 1;

Fig. 9       eine schematische Darstellung der Datenaufbereitung der mit der Sensoreinrichtung gemessenen Daten; und

Fig. 10a bis 10c       reale Messdaten des Stoßdämpfers nach Figur 4.

Mit Bezug auf die beiliegenden Figuren werden Ausführungsbeispiele und Varianten der Erfindung anhand einer Fahrwerksteuerung 300 mit einer Dämpfereinrichtung 1 für ein Fahrrad beschrieben.

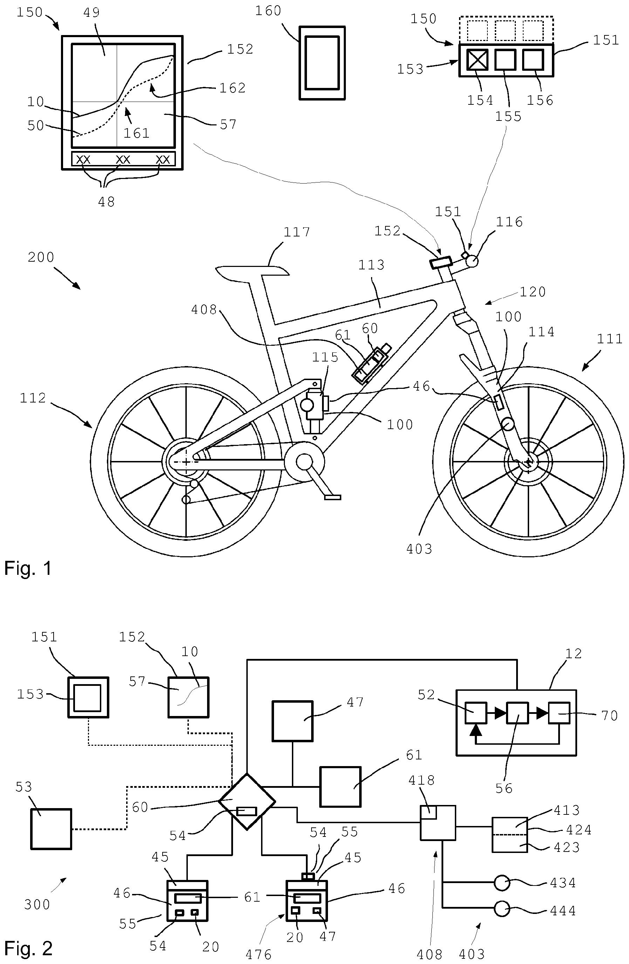

Fig. 1 zeigt eine schematische Darstellung eines Fahrrades 200, welches hier als Mountainbike ausgeführt ist und einen Rahmen 113 sowie ein Vorderrad 111 und ein Hinterrad 112 aufweist. Sowohl das Vorderrad 111 als auch das Hinterrad 112 sind mit Speichen ausgerüstet und können über die dargestellten Scheibenbremsen verfügen. Eine Gangschaltung dient zur Wahl des Übersetzungsverhältnisses. Weiterhin weist das Fahrrad 200 eine Lenkeinrichtung 116 mit einem Lenker auf. Weiterhin ist ein Sattel 117 vorgesehen.

Das Vorderrad 111 verfügt über einen als Federgabel 114 ausgeführten Stoßdämpfer 100 und an dem Hinterrad 112 ist ein als Hinterraddämpfer 115 ausgeführter Stoßdämpfer 100 vorgesehen.

Die Fahrwerksteuerung 300 umfasst im einfachsten Fall einen Stoßdämpfer 100 und eine Steuereinrichtung 46. Möglich ist es auch, dass die Fahrwerksteuerung 300 zwei Stoßdämpfer 100 (Federgabel und Hinterradstoßdämpfer) umfasst, an denen jeweils eine Steuereinrichtung 46 vorgesehen ist. Oder die Fahrwerksteuerung 300 umfasst zwei Stoßdämpfer 100 und eine zentrale Steuereinrichtung 60. Besonders bevorzugt umfasst die Fahrwerksteuerung 300 zwei Stoßdämpfer 100 und eine zentrale Steuereinrichtung 60 und jeweils eine Steuereinrichtung 46 an jedem Stoßdämpfer. Die (zentrale) Steuereinrichtung 60 kann zur Einstellung der Vorgaben und zur Koordination der beiden Stoßdämpfer dienen.

Die zentrale Steuereinrichtung 60 ist hier zusammen mit einer Batterieeinheit 61 in einem trinkflaschenartigen Behälter vorgesehen und an dem Unterrohr angeordnet, wo sonst eine Trinkflasche angeordnet ist, kann aber auch im Rahmen vorgesehen werden. Die zentrale Steuereinrichtung 60 kann auch an dem Lenker 116 angeordnet werden.

Die zentrale Steuereinrichtung 60 dient hier im Ausführungsbeispiel nach Fig. 1 zur Steuerung des Fahrwerks und steuert hier sowohl die Federgabel 114 als auch den Hinterradstoßdämpfer 115 jeweils separat und hier insbesondere synchron bzw. aufeinander abgestimmt.

Die Steuerung der Stoßdämpfer 100 und weiterer Fahrradkomponenten kann in Abhängigkeit verschiedenster Parameter erfolgen und erfolgt im Wesentlichen auch anhand von sensorisch erfassten Daten. Gegebenenfalls können auch die Feder- und/oder Dämpfungseigenschaften der Sattelstütze eingestellt werden. Es ist möglich, dass mit der zentralen Steuereinrichtung 60 auch die Schaltung zum Einstellen verschiedener Übersetzungen gesteuert werden kann. Insbesondere kann auch eine Alterung des Dämpfungsmediums, der Federeinrichtung und weiterer Komponenten berücksichtigt werden. Es ist auch bevorzugt, die Temperatur des Stoßdämpfers 100 zu berücksichtigen (Federgabel 114 und/oder Hinterradstoßdämpfer 115). Dabei kann insbesondere die Temperatur wenigstens der Dämpfereinrichtung 1 berücksichtigt werden.

Zusätzlich weist hier jeder Stoßdämpfer 100 wenigstens eine Steuereinrichtung 46 an einer hier austauschbar vorgesehenen Elektronikeinheit auf. Die Elektronikeinheiten können jeweils separate Batterieeinheiten aufweisen. Bevorzugt ist aber eine Energieversorgung durch die zentrale Batterieeinheit 61 oder die Unterstützung oder der Betrieb durch einen Dynamo oder dgl.

Die Fahrwerksteuerung 300 und die zentrale Steuereinrichtung 60 werden über Bedieneinrichtungen 150 bedient. Es sind zwei Bedieneinrichtungen 150 vorgesehen, nämlich eine Betätigungseinrichtung 151 und eine Einstelleinrichtung 152. Die Betätigungseinrichtung 151 weist mechanische Eingabeeinheiten 153 an den seitlichen Enden oder in der Nähe der seitlichen Enden des Lenkers 116 auf. Die Einstelleinrichtung 152 kann als Fahrradcomputer ausgeführt sein und ebenfalls am Lenker 116 positioniert werden. Möglich ist es aber auch, dass ein Smartphone 160, oder ein Tablett oder dergleichen als Einstelleinrichtung 152 eingesetzt wird und beispielsweise in der Tasche oder in dem Rucksack des Benutzers aufbewahrt wird, wenn keine Veränderung der Einstellungen vorgenommen wird.

Die Betätigungseinrichtung 151 umfasst hier drei mechanische Eingabeeinheiten als Bedienelemente 154, 155, 156 zur Bedienung des Stoßdämpfers 100. Es ist möglich, dass für die Federgabel 114 eine Betätigungseinrichtung 151 an einem Ende des Lenkers 116 angeordnet ist und das an dem anderen Ende des Lenkers eine entsprechende weitere Betätigungseinrichtung 151 für den Hinterradstoßdämpfer 115 vorgesehen ist. Möglich ist es auch, dass beide Stoßdämpfer mit einer Betätigungseinrichtung 151 synchron gesteuert werden. Möglich ist es auch, dass an einem seitlichen Ende des Lenkers 116 eine Betätigungseinrichtung mit beispielsweise sechs unterschiedlichen Bedienelementen zur Einstellung beider Stoßdämpfer 100 angeordnet ist.

Die Betätigungseinrichtung 151 ist erheblich robuster und widerstandsfähiger ausgeführt als die Bedieneinrichtung 152 und wird hier fest an dem Lenker 116 montiert. Die einzelnen als Druckschalter oder Taster ausgeführten Bedienelemente 154 bis 156 weisen jeweils Schutz gemäß IP54 oder besser IP67 nach DIN EN 60529 auf. Es liegt ein Schutz gegen Stöße von mindestens IK06 gemäß DIN EN 622622 vor. Damit sind die Bedienelemente 154 bis 156 im normalen Betrieb ausreichend geschützt, sodass eine Beschädigung der Bedienelemente im Betrieb auch bei normalen Stößen oder dergleichen nicht erfolgt. Außerdem sorgen die robusten Bedienelemente 154 bis 156 für eine zuverlässige Bedienung auch bei Downhillfahrten oder dergleichen.

Die Einstelleinrichtung 152 hingegen, die beispielsweise am Lenker angeklipst wird oder die in der Tasche oder in einem Rucksack des Benutzers verbleibt, bietet erheblich mehr und/oder übersichtlichere Einstellmöglichkeiten und kann dazu eingesetzt werden, eine angezeigte Dämpferkennlinie 10 in wenigstens zwei oder mehr Bereichen 161, 162 etc. zu verändern, um die gewünschten Dämpfereigenschaften einzustellen. Die Einstelleinrichtung 150 weist ein Display bzw. eine Anzeige 49 auf und kann auch Daten 48 ausgeben, die beispielsweise die Dämpfereinstellungen betreffen oder aber Daten über die aktuelle Fahrgeschwindigkeit etc. enthalten. Neben oder anstelle der Veränderung der Dämpfung kann über die Einstelleinrichtungen 150 und 152 auch wenigstens eine Federeigenschaft oder die Charakteristik der Federung verändert werden. Dabei kann insbesondere die Federhärte beim Ein- und oder Ausfedern beeinflusst werden. Außerdem kann gegebenenfalls die Ruhelage eingestellt werden. Beispielsweise kann ein Absenken der Federgabel 114 bei (steilen) Bergfahrten vorgenommen werden, wodurch der Neigungswinkel des Fahrrads 200 verringert wird.

Das Display 49 ist insbesondere als grafische Bedieneinheit oder Touchscreen 57 ausgeführt, sodass der Benutzer beispielsweise eine dargestellte Dämpferkennlinie 10 mit den Fingern berühren und durch Ziehen ändern kann. Dadurch kann aus der durchgezogen dargestellten Dämpferkennlinie 10 die auch dargestellte Dämpferkennlinie 50 erzeugt werden, die dann ab sofort für die Fahrzeugsteuerung 300 eingesetzt wird. Die Veränderung der Dämpferkennlinien 10, 50 ist auch während der Fahrt möglich. Hier wird nicht nur die Dämpfung verändert, sondern es kann auch gleichzeitig oder aber auch nur die Federung verändert werden.

Die Einstelleinrichtung 152 kann auch als Fahrradcomputer dienen und Informationen über die aktuelle Geschwindigkeit, sowie über die Durchschnittsgeschwindigkeit und/oder die Tages-, Tour, Runden- und Gesamtkilometer anzeigen. Möglich sind auch die Anzeige der aktuellen Position, der momentanen Höhe der gefahrenen Strecke sowie des Streckenprofils und auch eine mögliche Reichweite unter den aktuellen Dämpfungsbedingungen.

Figur 2 zeigt eine schematische Darstellung der Fahrwerksteuerung 300 und der Kommunikationsverbindungen einiger beteiligter Komponenten. Die zentrale Steuereinrichtung 60 kann drahtgebunden oder drahtlos mit den einzelnen Komponenten verbunden sein. Beispielsweise kann die Steuereinrichtung 60 (bzw. 46) über WLAN, Bluetooth, ANT+, GPRS, UMTS, LTE oder sonstige Übertragungsstandards mit den anderen Komponenten verbunden sein. Gegebenenfalls kann die Steuereinrichtung 60 über die gepunktet dargestellte Verbindung mit dem Internet 53 drahtlos verbunden sein.

Die Steuereinrichtungen 46 und 60 sind mit wenigstens einer Sensoreinrichtung 20 oder mit mehreren Sensoren verbunden. Wenigstens zeitweise sind die Bedieneinrichtungen 150, nämlich die Betätigungseinrichtung 151 und die Einstelleinrichtung 152 drahtgebunden oder drahtlos mit der Steuereinrichtung 60 gekoppelt. Die Betätigungseinrichtung 151 ist vorzugsweise drahtlos oder drahtgebunden an die Steuereinrichtung gekoppelt und kann über eine separate Batterie (z. B. Knopfzelle) verfügen.

Die robust aufgebaute Betätigungseinrichtung 151 verfügt über wenigstens eine mechanische Eingabeeinheit 153 in Form eines Schalters oder Tasters oder dergleichen, um darüber einen Umstellbefehl an die Steuereinrichtung 60 zur Umschaltung wenigstens einer Dämpfer- und/oder Federeigenschaft auszugeben. Das kann beispielsweise die Aktivierung eines Lockouts oder die Aktivierung einer Wippunterdrückung oder die Verstellung der Dämpferhärte und/oder der Federhärte sein. Vorzugsweise ist für jede dieser Eigenschaften ein separater Bedienknopf oder dergleichen vorgesehen. Es ist aber auch möglich, dass eine einzelne mechanische Eingabeeinheit 153 zum Umschalten der einzelnen Möglichkeiten verwendet wird. Die mechanische Eingabeeinheit 153 oder eine andere mechanische Eingabeeinheit kann zur Veränderung der Federungseigenschaften dienen.

Beispielsweise kann die Federgabel abgesenkt und der Hinterraddämpfer entsprechend angepasst werden.

Die Einstelleinrichtung 152 verfügt hier über eine grafische Bedieneinheit wie einen berührungsempfindlichen Bildschirm und kann unter anderen auf dem Display 49 die aktuelle Dämpferkennlinie 10 darstellen.

Die Steuereinrichtung 60 ist über Netzwerkschnittstellen 54 oder Funknetzschnittstellen 55 mit Steuereinrichtungen 46 der Stoßdämpfer 100 am Vorderrad und am Hinterrad verbunden. Die möglicherweise an jedem Stoßdämpfer 100 vorgesehene Steuereinrichtung 46 sorgt für die lokale Steuerung und kann jeweils eine Batterie aufweisen oder aber mit der zentralen Batterieeinheit 61 verbunden sein. Bevorzugt ist es, dass die Steuerung beider Stoßdämpfer über die Steuereinrichtung 60 erfolgt. Möglich ist auch eine lokale Steuerung der Stoßdämpfer 100 über zugeordnete Steuereinrichtung 46.

Vorzugsweise ist jedem Stoßdämpfer 100 wenigstens eine Sensoreinrichtung 20 zugeordnet, um Relativbewegungen zwischen den Komponenten bzw. Anschlusseinheiten 101 und 102 zu erfassen. Insbesondere ist eine Relativposition der Komponenten 101 und 102 relativ zueinander bestimmbar. Die Sensoreinrichtung 20 ist vorzugsweise als (relativer) Wegsensor ausgebildet oder umfasst wenigstens einen solchen. Möglich und bevorzugt ist auch der Einsatz wenigstens eines zusätzlichen Beschleunigungssensors 47. Die Sensoreinrichtung 20 kann auch vorzugsweise als Geschwindigkeitssensor ausgebildet sein oder einen solchen umfassen.

Anhand der in der Speichereinrichtung 45 abgelegten Dämpferkennlinie 10 des Stoßdämpfers 100 werden nach Ermittlung eines Kennwerts für die Relativgeschwindigkeit die zugehörige Dämpfungskraft und eine passende Federkraft eingestellt. Eine passende Federkraft kann über das Gewicht des Fahrers ermittelt werden. Beispielsweise kann durch automatische Ermittlung der Einfeder-Position (sag) nach dem Aufsetzen eines Fahrers das Gewicht des Fahrers abgeleitet werden. Aus dem Einfederungsweg beim Aufsetzen des Fahrers auf das Fahrrad kann auf einen geeigneten Luftdruck in der Fluidfeder bzw. Gasfeder geschlossen werden, der dann automatisch sofort oder im Laufe des Betriebs eingestellt oder angenähert wird.

Es ist weiterhin eine Erkennungseinrichtung 408 vorgesehen, welche hier in die zentrale Steuereinrichtung 60 integriert ist und zur Erkennung von Unwegsamkeiten dient. Die Erkennungseinrichtung 408 kann aber auch separat ausgebildet und an einem beliebigen geeigneten Ort am Fahrrad 200 untergebracht sein. Der Erkennungseinrichtung 408 ist eine Sensoreinheit 403 zugeordnet, welche einen an der Federgabel 114 angebrachten Ultraschallsensor 424 umfasst. Die Sensoreinheit 403 ist hier über eine nicht gezeigte Leitung oder drahtlos mit der Erkennungseinrichtung 408 verbunden. Im Betrieb sendet die Sensoreinheit 403 ein Ultraschallsignal aus und empfängt dessen Reflektion. Die Erkennungseinrichtung 408 wertet das empfangene Signal aus und erkennt so, ob es sich bei der Quelle der Reflektion um eine Unwegsamkeit im Gelände handelt. Dabei wird das reflektierte Signal insbesondere auch von der Erkennungseinrichtung 408 derart ausgewertet, dass eine Charakterisierung der Unwegsamkeit möglich ist. Als Folge einer erkannten bzw. charakterisierten Unwegsamkeit liefert die Erkennungseinrichtung 408 ein entsprechendes Steuersignal an die zentrale Steuereinrichtung 60. Möglich ist auch eine Bildauswertung der Bilder einer Kamera.

Als Reaktion auf eine erkannte Unwegsamkeit steuert die Erkennungseinrichtung 408 in Verbindung mit der zentralen Steuereinheit 60 die als Hinterraddämpfer 115 ausgebildete zweite Dämpfereinrichtung zeitversetzt zu der Federgabel 114 an. Der Zeitversatz zwischen der Ansteuerung der Federgabel 114 und dem Hinterraddämpfer 115 wird von der Erkennungseinrichtung 408 ebenfalls in Verbindung mit der Steuereinrichtung 60 in Abhängigkeit der Fahrgeschwindigkeit bestimmt. Zur Bestimmung der Fahrgeschwindigkeit sind entsprechende Sensoren an wenigstens einem der Räder 111, 112 angeordnet und mit der zentralen Steuereinrichtung 60 wirkverbunden. Die Bestimmung der Fahrgeschwindigkeit kann auch über ein GPS-Signal erfolgen

In Figur 2 ist der Steuerkreislauf 12 schematisch dargestellt, der in der Speichereinrichtung 45 abgelegt ist und in der Steuereinrichtung 46 oder 60 hinterlegt oder einprogrammiert ist. Der Steuerkreislauf 12 wird im Betrieb periodisch und insbesondere kontinuierlich periodisch durchgeführt. Im Schritt 52 wird mit der Sensoreinrichtung 20 eine aktuelle Relativbewegung bzw. Relativgeschwindigkeit der ersten Komponente bzw. Anschlusseinheit 101 zur zweiten Komponente bzw. Anschlusseinheit 102 erfasst. Aus den Werten der Sensoreinrichtung 20 oder wird im Schritt 52 ein Kennwert abgeleitet, der repräsentativ für die aktuelle Relativgeschwindigkeit ist. Vorzugsweise wird als Kennwert eine Relativgeschwindigkeit verwendet.

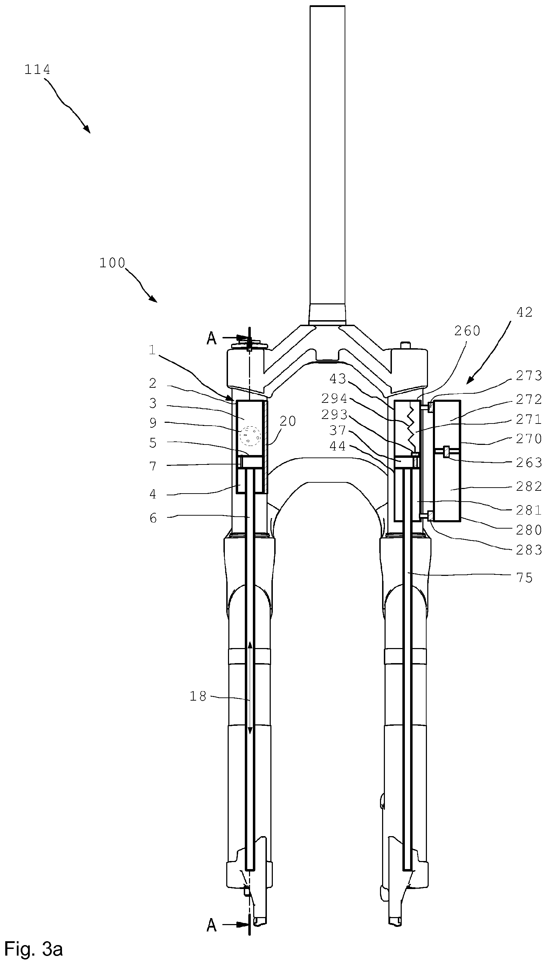

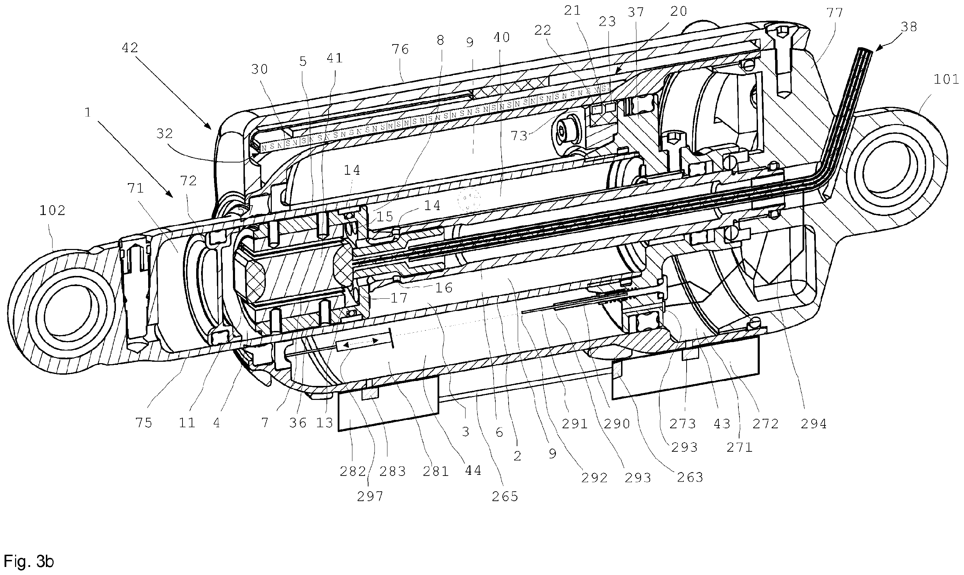

Die Dämpfereinrichtung (vgl. Fig. 3a oder 3b) des Stoßdämpfers 100 weist eine Dämpfereinrichtung 1 mit einer ersten und einer zweiten Dämpferkammer auf, zwischen denen ein Dämpfungsventil angeordnet ist. Das Dämpfungsventil weist wenigstens einen Dämpfungskanal 7 auf, der einem Magnetfeld einer elektrischen Spuleneinrichtung ausgesetzt wird, um das magnetorheologische Medium bzw. Fluid (MRF) in dem Dämpfungskanal 7 zu beeinflussen und so die gewünschte Dämpfungskraft einzustellen. Bei der Einstellung der Dämpfungskraft kann eine Dämpferkennlinie berücksichtigt werden.

Im Schritt 56 wird dann anschließend aus den aktuellen Messwerten unter Berücksichtigung der vorbestimmten oder ausgewählten Dämpferkennlinie die zugehörige einzustellende Dämpfungskraft abgeleitet. Daraus wird ein Maß für die aktuell einzustellende Feldstärke bzw. Stromstärke abgeleitet, mit welcher die einzustellende Dämpfungskraft wenigstens näherungsweise erreicht wird. Das Maß kann die Feldstärke selbst sein oder aber z. B. die Stromstärke angeben, mit welcher die einzustellende Dämpfungskraft wenigstens etwa erreicht wird.

Im darauf folgenden Schritt 70 wird die aktuell einzustellende Feldstärke erzeugt oder die entsprechende Stromstärke an die elektrische Spuleneinrichtung 11 als Felderzeugungseinrichtung angelegt, sodass innerhalb eines einzelnen Zyklus bzw. einer Zeitperiode des Steuerkreislaufes 12 die Dämpfungskraft erzeugt wird, die bei der gewählten oder vorbestimmten Dämpferkennlinie zu der aktuellen Relativgeschwindigkeit der ersten Anschlusseinheit 101 zu der zweiten Anschlusseinheit 102 vorgesehen ist. Anschließend startet der nächste Zyklus und es wird wieder Schritt 52 durchgeführt. In jedem Zyklus oder in bestimmten zeitlichen Abständen oder bei bestimmten Ereignissen wird die Position oder die Federkraft der Federeinrichtung 42 überprüft.

Dazu werden bei der Fluidfeder 260 (vgl. Fig. 3a oder 3b) die Stärke der Federkraft der Positivkammer 270 und die Stärke der Federkraft der Negativkammer 280 überprüft oder ermittelt. Wird eine härtere Fluidfeder 261 gewünscht, kann beispielsweise die zweite Positivkammer 272 abgeschaltet werden, sodass die Fluidfeder 260 einen steileren Verlauf der Federkraft erhält. Oder es wird das Volumen der Negativkammer 280 verändert oder es wird eine Position 292 der Ausgleichseinrichtung 290 verändert.

Die hier gezeigte zentrale Steuereinrichtung 60 ist zudem mit der erfindungsgemäßen Federgabel oder dem Lenker wirkverbunden. Die Fahrradkomponente 401 besteht aus der Erkennungseinrichtung 408 und einem Ultraschallsensor 424. Der Ultraschallsensor 424 kann hier ein Ultraschallsignal aussenden und dieses Signal auch wieder empfangen. Der Sensor 424 vereint somit eine Sendeeinheit 413 und eine Empfangseinheit 423 in einem Bauteil. Dadurch ist eine besonders unauffällige und platzsparende Unterbringung möglich. Das ist besonders bei Sportfahrrädern von Vorteil, bei denen erhöhter Wert auf ein geringes Gewicht und gute aerodynamische Eigenschaften gelegt wird. Zudem wird auch das äußere Erscheinungsbild des Fahrrads 200 nicht beeinträchtigt.

Alternativ kann die Erkennungseinrichtung 408 auch mit einem Infrarotsensor 434 verbunden sein. Es kann auch ein Radarsensor 444 vorgesehen sein. Die Erkennungseinrichtung 408 weist hier auch eine integrierte Speichereinrichtung 418 auf. Damit ist eine Hinterlegung der erkannten Unwegsamkeiten sowie der daraufhin vorgenommenen Dämpfereinstellungen möglich. Diese können dann später z. B. von einem Benutzer über eine entsprechende Schnittstelle wie z. B. ein Smartphone 160 abgerufen werden. Des Weiteren greift die Erkennungseinrichtung 408 hier auf Daten einer Sensoreinrichtung 20 zurück. Die Erkennungseinrichtung 408 berücksichtigt dabei die erfassten Werte der Sensoreinrichtung 20, um die Dämpferauslastung überwachen zu können.

Fig. 3a zeigt in einer stark schematischen Ansicht eine Federgabel 114, die für das Vorderrad 111 Anwendung findet und Fig. 3b zeigt den Hinterraddämpfer 115, die im Folgenden gemeinsam beschrieben werden.

Die Federgabel 114 weist einen Stoßdämpfer 100 auf. Der Stoßdämpfer 100 umfasst eine Dämpfereinrichtung 1 in einem Bein der Federgabel und eine Federeinrichtung 42 in dem anderen Bein der Federgabel. In anderen Ausgestaltungen können die Dämpfereinrichtung 1 und die Federeinrichtung 42 auch in einem Bein gemeinsam angeordnet sein.

Der Stoßdämpfer 100 wird mit dem ersten Ende als Anschlusseinheit 101 und dem zweiten Ende als Anschlusseinheit 102 an unterschiedlichen Teilen der Trageinrichtung 120 bzw. des Rahmens 113 befestigt, um Relativbewegungen zu federn und zu dämpfen.

Die Dämpfereinrichtung 1 umfasst eine erste Dämpferkammer 3 und eine zweite Dämpferkammer 4 in einem gemeinsamen Dämpfergehäuse 2. Die beiden Dämpferkammer 3 und 4 sind voneinander durch den Dämpferkolben bzw. Dämpfungskolben 5 getrennt, in oder an dem ein magnetorheologisches Dämpfungsventil 8 einen Dämpfungskanal 7 aufweist, durch den das magnetorheologische Dämpfungsfluid 9 (MRF) strömt. Während das Dämpfergehäuse 2 an dem oberen Teil der Federgabel 114 und somit dem Rahmen 113 befestigt ist, ist der Dämpferkolben 5 über die Kolbenstange 6 mit dem unteren Ausfallende verbunden.

In dem anderen Federbein der Federgabel ist hier die Federeinrichtung 42 angeordnet, die hier eine als Fluidfeder ausgebildete Federeinheit 260 umfasst. Die Federeinrichtung weist ein Gehäuse auf, in welchem der Federungskolben 37 eine Positivkammer 270 von einer Negativkammer 280 trennt. Die Positivkammer 270 bildet eine Positivfeder und die Negativkammer 280 bildet eine Negativfeder, deren Federkraft in der Ruheposition meist geringer ist, aber bei der die Federkraft der der Positivfeder entgegengesetzt ist. Dadurch wird ein gutes Ansprechverhalten erreicht, da auch bei kleinen Stößen die Fluidfeder reagiert. Die Fluidfeder ist mit einem Fluid und hier mit Gas und vorzugsweise Luft gefüllt.

Die Positivfeder umfasst hier zwei Teilkammern 271 und 272, die durch ein Steuerventil 273 voneinander bedarfsweise getrennt oder miteinander verbunden werden können.

Die Negativfeder umfasst hier zwei Teilkammern 281 und 282, die durch ein Steuerventil 283 voneinander bedarfsweise getrennt oder miteinander verbunden werden können.

Die Teilkammer 272 der Positivkammer 270 und die Teilkammer 282 der Negativkammer 280 können über das Steuerventil 263 miteinander verbunden werden. Dadurch wird es mit den Steuerventilen 263, 273 und 283 möglich, an jeder beliebigen Federposition einen Druckausgleich zwischen der Positivkammer und der Negativkammer vorzunehmen, wodurch die jeweilige Charakteristik der Fluidfeder geändert wird. Die Steuerventile 263, 273 und 283 dienen dabei als Aktoren, welche durch die Steuereinrichtung 60 gesteuert betätigt werden. Dadurch kann die Ruhelage frei eingestellt werden und auch ein Absenken einer Federgabel beispielsweise bei Bergfahrten erreicht werden. Bei einem Hinterradstoßdämpfer kann ein gegebenenfalls vorhandenes Zusatzvolumen in einer Teilkammer weggeschaltet werden und somit die Federung am Hinterrad für eine Bergauffahrt härter eingestellt werden. Es ist möglich, dass nur eines der Steuerventile 263, 273 und 283 vorgesehen ist. Beispielsweise kann nur das Steuerventil 273 (oder 283) vorgesehen sein, sodass durch Öffnen bzw. Schließen des Steuerventils 273 (bzw. 283) das Volumen der Positivkammer 270 (Negativkammer 280) und somit die Federcharakteristik der Federeinheit 260 verändert wird.

Es ist auch möglich, dass die Federgabel 114 nur ein Steuerventil 293 im Federungskolben 37 aufweist, welches über ein Kabel bzw. eine Steuerleitung 294 mit der Steuereinrichtung 60 verbunden ist. Durch das Öffnen des Steuerventils 293 kann ein Gastaustausch an jeder beliebigen axialen Position des Federungskolbens 37 ermöglicht werden. Ein Druckausgleich an einer geeigneten Stelle verändert die Ruhelage und führt z. B. zu einem Absenken oder zu einer Überführung in die Normallage, wenn die Federgabel abgesenkt war.

Durch geeignete Steuerung der Steuerventile kann auch das Druckniveau in der Positiv- und/oder Negativkammer beeinflusst werden.

Fig. 3b zeigt in einer stark schematischen Ansicht einen Querschnitt eines Stoßdämpfer 100, der hier beispielsweise in dem Hinterraddämpfer 115 Anwendung findet.

Der Stoßdämpfer 100 umfasst eine Dämpfereinrichtung 1. Der Stoßdämpfer 100 wird mit dem ersten Ende als Komponente 101 und dem zweiten Ende als Komponente 102 an unterschiedlichen Teilen der Trageinrichtung 120 bzw. des Rahmens 113 befestigt, um Relativbewegungen zu dämpfen.

In dem Dämpfergehäuse 2 ist eine Dämpfungskolbeneinheit 40 vorgesehen, die einen Dämpfungskolben 5 mit einem Dämpfungsventil 8 und eine damit verbundene Kolbenstange 6 umfasst. In dem Dämpfungskolben 5 ist das magnetorheologische Dämpfungsventil 8 vorgesehen, welches hier eine Felderzeugungseinrichtung 26 und insbesondere eine elektrische Spule 11 umfasst, um eine entsprechende Feldstärke zu erzeugen. Die Magnetfeldlinien verlaufen dabei in dem Zentralbereich des Kerns 41 etwa senkrecht zur Längserstreckung der Kolbenstange 6 und durchtreten somit etwa senkrecht die Dämpfungskanäle 7 Dadurch wird eine effektive Beeinflussung des sich in den Dämpfungskanälen 7 befindenden magnetorheologischen Fluides bewirkt, sodass der Durchfluss durch das Dämpfungsventil 8 effektiv gedämpft werden kann. Der Stoßdämpfer 100 umfasst eine erste Dämpferkammer 3 und eine zweite Dämpferkammer 4, die durch das als Kolben 5 ausgebildete Dämpfungsventil 8 voneinander getrennt sind. In anderen Ausgestaltungen ist auch ein externes Dämpferventil 8 möglich, welches außerhalb des Dämpfergehäuses 2 angeordnet und über entsprechende Zuleitungen angeschlossen ist.

Zu dem Ende 102 hin schließt sich an die erste Dämpferkammer 4 der Ausgleichskolben 72 und danach der Ausgleichsraum 71 an. Der Ausgleichsraum 71 ist vorzugsweise mit einem Gas gefüllt und dient zum Ausgleich des Kolbenstangenvolumens, welches beim Einfedern in das ganze Dämpfergehäuse 2 eintritt.

Nicht nur in dem Dämpfungsventil 8, sondern hier in den beiden Dämpfungskammern 3 und 4 insgesamt befindet sich hier ein magnetorheologisches Fluid 9 als feldempfindliches Medium.

Der Strömungskanal 7 zwischen der ersten Dämpferkammer 3 und der zweiten Dämpferkammer 4 erstreckt sich ausgehend von der zweiten Dämpferkammer 4 zunächst durch die fächerartigen Dämpfungskanäle 7, die am anderen Ende in den Sammelraum 13 bzw. in die Sammelräume 13 münden. Dort sammelt sich nach dem Austritt aus den Dämpfungskanälen 7 das magnetorheologische Fluid, bevor es durch die Strömungsöffnungen 14, 15 in die erste Dämpfungskammer 3 übertritt. Beim Einfedern, also in der Druckstufe, werden hier sämtliche Strömungsöffnungen 14, 15 durchströmt. Das bedeutet, das der Hauptteil der Strömung hier durch die Strömungsöffnungen 15 durchtritt und die Einwegventile 17 an den Strömungsöffnungen 15 automatisch öffnen, sodass das magnetorheologische Fluid aus der zweiten Dämpferkammer 4 in die erste Dämpferkammer 3 übertreten kann.

Im dargestellten eingefederten Zustand ist die erste Dämpferkammer 3 vollständig radial von der zweiten Federkammer 44 der Federeinrichtung 42 umgeben. Dadurch wird ein besonders kompakter Aufbau ermöglicht.

Der Stoßdämpfer 100 kann eine Ausgleichseinrichtung 290 umfassen, welche einen Druckausgleich zwischen der Positivkammer 270 und der Negativkammer 280 ermöglicht. Die Position des Druckausgleichs kann einstellbar sein. Dazu kann die Ausgleichseinrichtung 290 z. B. einen teleskopierbaren Ausgleichsstößel 291 aufweisen, der mehr oder weniger aus dem Federungskolben 37 ausfahrbar ist. Dadurch erreicht der ausfahrbare Ausgleichsstößel 291 früher (oder später) einen Anschlag am Ende der Negativkammer 280. Die Ausgleichseinrichtung 290 kann über ein elektrisches Kabel 294 mit der Steuerungseinrichtung 46 oder 60 verbunden sein. Wenn der Ausgleichsstößel 291 anstößt, öffnet er eine Fluidöffnung daran, sodass ein Gasausgleich und somit ein Druckausgleich zwischen der Positivkammer 270 und der Negativkammer 280 erfolgt.

Beim Ausfedern schließt die Ausgleichseinrichtung 290 wieder automatisch. Je nach Position des Ausgleichs werden unterschiedliche Druckverhältnisse an der Fluidfeder eingestellt, die das Fahrwerk entsprechend beeinflussen. Möglich ist es auch, dass am Ende der Negativkammer 280 ein verstellbarer oder verfahrbarer Anschlag für einen feststehenden Ausgleichsstößel 291 vorgesehen ist, um eine Variation der Federcharakteristik zu erzielen. Alternativ oder zusätzlich dazu kann ein längenverstellbarer Anschlag 297 vorgesehen sein, gegen den der Ausgleichsstößel 291 an einer einstellbaren und veränderbaren Position 292 anschlägt. Wenn der Ausgleichsstößel 291 anschlägt, öffnet der Ausgleichsstößel 291 das Steuerventil 293 bzw. bildet eine Strömungsöffnung, durch welche ein Druckausgleich zwischen Positiv- und Negativkammer erfolgen kann. Fig. 3b zeigt eine Stellung 292 mit ausgefahrenem Ausgleichsstößel 291. Der Ausgleichsstößel 291 kann auch eingefahren werden, sodass sich eine andere Position ergibt, bei der die Ausgleichseinrichtung 290 öffnet. Der Ausgleichsstößel 291 ist vorzugsweise mit einer Feder beaufschlagt.

Weiterhin kann auch ein elektrisch steuerbares und z. B. über das elektrische Kabel 294 mit Energie versorgtes Ausgleichsventil 293 vorgesehen sein, um an geeigneten Positionen einen teilweisen oder vollständigen Druckausgleich zwischen der Positivkammer 270 und der Negativkammer 280 durchzuführen.

Weiterhin kann die Positivkammer 270 aus mehreren Teilkammern 271, 272 bestehen. Zu der Grundkammer als Teilkammer 271 kann bei Bedarf oder auf Wunsch die Teilkammer 272 zugeschaltet werden, um die Federhärte zu verändern und insbesondere zu verringern.

Umgekehrt kann auch die Teilkammer 272 abgeschaltet und von der Teilkammer 271 getrennt werden, wenn die Federhärte verändert und insbesondere erhöht werden soll.

Analog dazu kann kann die Negativkammer 280 aus mehreren Teilkammern 281, 282 bestehen. Zu der ersten Teilkammer 281 kann bei Bedarf oder auf Wunsch die zweite Teilkammer 282 zugeschaltet werden. Entsprechend kann auch die Teilkammer 282 abgeschaltet und von der Teilkammer 281 getrennt werden. In einer weiteren Ausgestaltung umfasst die Positivkammer 270 Teilkammern 271 und 272 und die Negativkammer 280 Teilkammern 281 und 282. Die Ausgleichseinrichtung 290 umfasst in dieser Ausgestaltung Steuerventile 273, 283 und 263 und eine Verbindungsleitung 265, welche die Teilkammern 272 und 282 bedarfsweise miteinander verbindet. Werden die drei Steuerventile 273, 283 und 263 geöffnet, so findet ein Druckausgleich zwischen der Positivkammer 270 und der Negativkammer 280 statt. Die Position 292 des Druckausgleichs ist dabei beliebig wählbar und unabhängig von einem Ausgleichsstößel 291. Deshalb muss bei einer solchen Ausgestaltung weder ein Ausgleichsstößel 291, noch ein Steuerventil 293 im Kolben 37, noch ein einstellbarer Anschlag 297 vorgesehen sein. Der Federungskolben 37 ist am Ende des Dämpfergehäuses 2 vorgesehen.

Die Zu- und Abschaltung der Teilkammern kann in allen Fällen auch positionsabhängig beim Ein- oder Ausfedern erfolgen.

Sowohl der Stoßdämpfer der Federgabel 114 als auch der Stoßdämpfer für das Hinterrad weist hier jeweils eine Sensoreinrichtung 20 auf. Die Sensoreinrichtung 20 umfasst jeweils einen Detektorkopf 21 und eine strukturiert ausgebildete Maßstabeinrichtung 30.

Die Maßstabeinrichtung 30 umfasst hier ein Sensorband mit Permanentmagneteinheiten als Felderzeugungseinheit. Die Pole der Permanentmagneteinheiten wechselnd sich alternierend ab, sodass entlang der Bewegungsrichtung des Detektors 22 alternierend Nord-Südpole angeordnet sind. Die magnetische Feldstärke wird durch den Detektorkopf ausgewertet und daraus die Position 19 ermittelt. Der Aufbau und die Funktion der Sensoreinrichtung 20 werden später noch detaillierter erläutert.

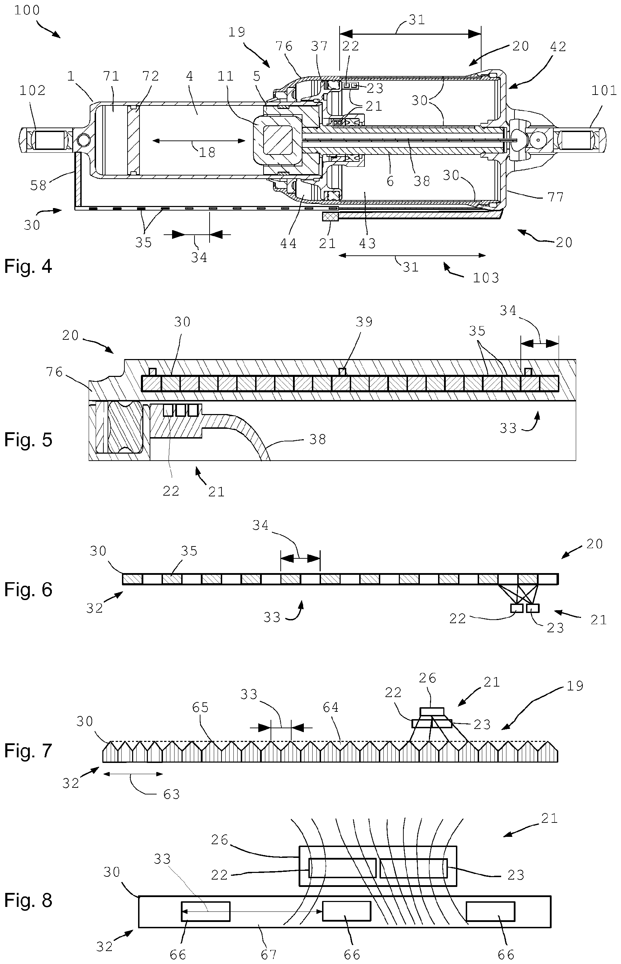

In Figur 4 ist ein weiteres Ausführungsbeispiel eines Stoßdämpfers 100 abgebildet, wobei zur besseren Verdeutlichung verschiedene Varianten einer Sensoreinrichtung 20 eingezeichnet sind, von denen in der Regel nur eine eingebaut ist.

Der Stoßdämpfer 100 erstreckt sich hier zwischen den an den Enden vorgesehenen Anschlusseinheiten 101 und 102 und umfasst eine Dämpfereinrichtung 1 und eine Federeinrichtung 42, die als Luftfeder ausgeführt ist und eine Positivkammer 43 und eine Negativkammer 44 umfasst. Die Dämpfereinrichtung 1 umfasst eine erste Dämpferkammer 3 und eine zweite Dämpferkammer 4, die durch einen Dämpfungskolben 5 voneinander getrennt sind. In dem Dämpfungskolben 5 ist ein bzw. wenigstens ein Dämpfungsventil 8 vorgesehen (in Figur 4 außerhalb der Schnittebene und deshalb nicht sichtbar). Das Dämpfungsventil 8 bzw. der "Öffnungszustand" des Dämpfungsventils wird über eine elektrische Spuleneinrichtung 11 angesteuert. Die Spule der elektrischen Spuleneinrichtung 11 ist nicht in Umfangsrichtung um die Kolbenstange 6 herumgewickelt, sondern um eine Achse, die sich quer zur Längserstreckung der Kolbenstange 6 erstreckt. Eine Relativbewegung findet hier linear statt und erfolgt in der Bewegungsrichtung 18.

In dem Dämpfergehäuse 2 ist ein Ausgleichskolben 72 angeordnet, der einen insbesondere mit Gas gefüllten Ausgleichsraum 71 für das Volumen der Kolbenstange abtrennt.

Die Federeinrichtung 42 erstreckt sich wenigstens teilweise um die Dämpfereinrichtung 1 herum und umfasst ein Federgehäuse 76. Ein Ende der Dämpfereinrichtung 1 ist mit einem Federungskolben 7 30 verbunden bzw. bildet einen solchen. Der Federungskolben 7 trennt die Positivkammer 43 von einer Negativkammer 44.

Das Federgehäuse 76 wird zu dem Ende der Anschlusseinheit 101 durch einen Deckel 77 abgeschlossen. Dort wird auch das Anschlusskabel 38 für die elektrische Spuleneinrichtung 11 herausgeführt. Vorzugsweise wird dort auch ein elektrisches Anschlusskabel für die Sensoreinrichtung 20 nach außen herausgeführt.

Die Sensoreinrichtung 20 umfasst zwei Sensorteile, nämlich den Detektorkopf 21, der in der oberhalb der Mittellinie dargestellten Variante innerhalb der Positivkammer 43 der Federeinrichtung 42 angeordnet ist. Die Sensoreinrichtung 20 umfasst als weiteres Sensorteil die Maßstabeinrichtung 30, die in verschiedenen Varianten an dem Federgehäuse 76 angeordnet oder aufgenommen ist. Je nach Ausgestaltung und Materialwahl des Federgehäuses 76 und nach Messprinzip der Sensoreinrichtung 20 kann die Maßstabeinrichtung 30 in die innere oder die äußere Wandung oder mitten in die Wandung des Federgehäuses 76 integriert sein. Die Maßstabeinrichtung 30 wird bevorzugt auf der Innenwandung des Federgehäuses 76 angeordnet, kann aber auch außen auf dem Federgehäuse 76 angebracht oder aufgebracht sein.

Dargestellt sind vier Varianten. In einer ersten Variante ist die Maßstabeinrichtung 30 auf der Außenseite des Federgehäuses 76 angebracht und insbesondere in eine Nut auf der Außenseite des Federgehäuses 76 eingelassen. Der Detektorkopf 21 befindet sich radial relativ weit außen in der Positivkammer 43 der Federeinrichtung 42.

In einer zweiten dargestellten Variante ist die Maßstabeinrichtung 30 auf der Innenseite des Federgehäuses 76 in z. B. einer Nut auf der Innenseite des Federgehäuses 76 oder direkt in die Wandung des Federgehäuses 76 eingelassen. Der Detektorkopf 21 befindet sich ebenfalls innerhalb der Positivkammer 43 der Federeinrichtung 42 radial weit außen.

In einer dritten dargestellten Variante ist die Maßstabeinrichtung 30 in die Kolbenstange des Federungskolbens integriert. Der Detektorkopf 21 befindet sich ebenfalls innerhalb der Positivkammer 43 der Federeinrichtung 42, aber in dieser Variante vorzugsweise radial weiter innen.

In der vierten dargestellten Variante befinden sich Maßstabeinrichtung 30 und Detektorkopf 21 radial außerhalb des Federgehäuses 76.

Der Detektorkopf 21 umfasst in jedem Fall vorzugsweise (wenigstens) zwei Detektoren 22 und 23, die hier in Bewegungsrichtung 18 versetzt zueinander angeordnet sind. Die Maßstabeinrichtung 30 weist in jedem Fall eine sich über eine Messstrecke 31 erstreckende Struktur 32 auf, über der sich die physikalischen Eigenschaften der Maßstabeinrichtung 30 periodisch ändern. Vorzugsweise sind auf der Maßstabeinrichtung 30 Sensorabschnitte 33 (vergleiche Figuren 5 bis 8) angeordnet, die sich jeweils wiederholende elektrische und/oder magnetische Eigenschaften haben und somit die Struktur 32 der Maßstabeinrichtung 30 bilden.

Dabei kann, wie schon in Figur 3b dargestellt, die Maßstabeinrichtung 30 eine Vielzahl von Permanentmagneten aufweisen, deren Pole alternierend angeordnet sind, sodass sich ein Nordpol und ein Südpol alternierend abwechseln.

In einer solchen Ausgestaltung ist der Detektorkopf 21 mit Detektoren 22 und 23 ausgerüstet, die ein Magnetfeld detektieren. Beispielsweise können die Detektoren 22 und 23 als elektrische Spulen ausgebildet sein oder beispielsweise als Hallsensoren ausgeführt sein, um die Intensität eines magnetischen Feldes zu erfassen.

Findet nun eine Relativbewegung der Anschlusseinheiten 101 und 102 des Stoßdämpfers 100 zueinander statt, so ändert sich die Position 19 des Stoßdämpfers 100 und es verschiebt sich die relative Position des Detektorkopfs 21 relativ zu der Maßstabeinrichtung 30. Durch Auswertung der Signalstärke eines Detektors 22, 23 und insbesondere von wenigstens zwei Detektoren 22, 23 kann somit auf die relative Position des Detektorkopfs 21 relativ zu einem Sensorabschnitt 33 bzw. gegenüber der Maßstabeinrichtung 30 oder der absoluten Position innerhalb eines Sensorabschnitts 33 zurückgeschlossen werden. Werden zwei Detektoren in Bewegungsrichtung 18 versetzt zueinander angeordnet und erfassen beide Detektoren das Magnetfeld der Maßstabeinrichtung 30, so kann durch Auswertung der Signale die Position 19 und die Bewegungsrichtung 18 sehr genau ermittelt werden.

Bei der kontinuierlichen Bewegung wird in der Speichereinrichtung 45 der Steuereinrichtung 46 die Anzahl der passierten Sensorabschnitte bzw. Perioden hinterlegt, sodass auf die absolute Position 19 zurückgeschlossen werden kann. Dazu ist nur erforderlich, dass die Messfrequenz derart hoch ist, dass nicht während eines Messzyklus ein vollständiger Sensorabschnitt "unbemerkt" vorbeigeschoben wird.

Bei der Variante, bei der die Sensoreinrichtung 20 vollständig außerhalb des Dämpfergehäuses 2 und des Federgehäuses 76 angeordnet ist, hält ein Halter 58 die Maßstabeinrichtung 30 und verbindet die Maßstabeinrichtung fest mit einem Ende bzw. einer Anschlusseinheit 102 des Stoßdämpfers 100. Mit dem anderen Ende bzw. der anderen Anschlusseinheit 101 des Stoßdämpfers 100 ist der Detektorkopf 21 verbunden. Der Detektorkopf 21 wird so gehalten, dass er berührungslos mit einem geringen Abstand von der Maßstabeinrichtung 30 angeordnet ist. Bei einer Relativbewegung der Anschlusseinheiten des Stoßdämpfers 100 erfolgt so auch eine Relativbewegung der Maßstabeinrichtung 30 relativ zu dem Detektorkopf 21. Auch hier kann über die Messstrecke 31, die vorzugsweise im Wesentlichen dem Dämpferhub 103 entspricht, über die Auswertung der Feldstärken eine Relativposition ermittelt werden.

Dadurch, dass die Intensität der Feldstärke ermittelt wird, kann die Auflösung der Sensoreinrichtung 20 erheblich gesteigert werden. Dabei ist es möglich, dass die Auflösung zur Bestimmung der Position 19 einen Faktor 50, 100, 500, 1000, 2000 oder mehr kleiner ist als eine Länge 34 eines Sensorabschnitts 33. Besonders bevorzugt werden Faktoren verwendet, die einer Potenz von 2 entsprechen, beispielsweise 128, 256, 512, 1024, 2048, 4096, 8192, 16384 oder mehr. Dies erleichtert die (digitale) Signalverarbeitung. Dadurch kann bei Verwendung einer Struktur 32 mit Sensorabschnitten 33 im Millimeterbereich eine Auflösung im Mikrometerbereich erreicht werden.

Die Sensoreinrichtung 20 umfasst an der Maßstabeinrichtung 30 Permanentmagneten als Felderzeugungseinheiten 35, so wie es in Figur 3b dargestellt ist. Möglich ist es aber auch, dass sich über der Länge der Struktur 32 auch noch andere physikalische und insbesondere magnetische und/oder elektrische Eigenschaften ändern.

Beispielsweise kann die Maßstabeinrichtung 30 wenigstens zum Teil aus einem ferromagnetischen Material gebildet sein, wobei die Maßstabeinrichtung 30 an dem ferromagnetischen Material beispielsweise in regelmäßigen oder vorbestimmten Abständen Zacken, Zähne, Vorsprünge, Nuten oder andere Strukturen aufweist, die zu einer Positionsbestimmung dienen können. Möglich ist es auch, dass die Maßstabeinrichtung zum Beispiel insgesamt aus einem Isolator 67 besteht, in welches Material in periodischen Abständen Leiter 66 eingebettet sind. Der Isolator 67 ist insbesondere ein Nicht-Leiter.

Verschiedene Messprinzipien der Sensoreinrichtung 20 werden im Folgenden mit Bezug auf die Figuren 5 bis 8 erläutert.

In Figur 5 ist eine Variante der Sensoreinrichtung 20 abgebildet, bei der die Struktur 30 Permanentmagnete als Felderzeugungseinheiten 35 aufweist. Dabei sind die Pole der Felderzeugungseinheiten 35 vorzugsweise alternierend angeordnet, sodass sich über der Messstrecke 31 der Maßstabeinrichtung 30 ein sich periodisch änderndes Magnetfeld ergibt.

In Figur 5 ist der Detektorkopf 21 im Inneren des Federgehäuses 76 angeordnet und die Maßstabeinrichtung 30 befindet sich integriert in das Federgehäuse 76. In bestimmten Abständen sind Positionsmarken 39 oder dergleichen vorgesehen, um bestimmte Kalibrierungsstellen zur Kalibrierung der absoluten Position zu zur Verfügung zu stellen oder aber über bestimmte Codierungen eine absolute Positionsbestimmung zu ermöglichen. Es können in allen Fällen auch separate Endlagensensoren vorgesehen sein.

Die Maßstabeinrichtung 30 kann aus einzelnen Permanentmagneten zusammengesetzt sein oder als einzelner Magnet mit abwechselnder Magnetisierung ausgeführt sein. Bevorzugt wird als Maßstabeinrichtung 30 ein Magnetband verwendet, beispielsweise aus kunststoffgebundenem magnetischem Material.

Die Maßstabeinrichtung 30 kann insbesondere Teil des Federgehäuses 76 oder eines anderen Teils der Dämpfereinrichtung 1 sein, wenn dieses zumindest zum Teil aus einem Material mit hartmagnetischen Eigenschaften besteht. In diesem Fall kann die relative, in bestimmten Ausführungen auch absolute, Positionsbestimmung durch lokal unterschiedliche Magnetisierung des Materials erfolgen.

Eine bevorzugte Ausführung sieht vor, die Maßstabeinrichtung 30 in Form einer hartmagnetischen Beschichtung auf das Federgehäuse 76 aufzubringen. Dabei sind Schichtstärken von weniger als 1 Millimeter oder weniger als 100 Mikrometer und insbesondere weniger als 10 Mikrometer erreichbar und reichen zur Positionsbestimmung aus.

Figur 6 zeigt eine Variante, bei der an der Maßstabeinrichtung 30 ebenfalls in regelmäßigen Abständen Permanentmagnete 35 angeordnet sind. Zwischen den Permanentmagneten 35 ist beispielsweise jeweils ein nicht-magnetisches Material vorgesehen. Auch dadurch ergibt sich eine sich periodisch ändernde Intensität des Magnetfeldes über der Messstrecke 31 der Maßstabeinrichtung 30. Stark schematisch eingezeichnet ist ein Detektorkopf 21 mit hier ebenfalls zwei Detektoren 22, 23, wobei der Erfassungswinkel für die beiden Detektoren eingezeichnet ist, um zu verdeutlichen, dass sich bei diesem in Bewegungsrichtung 18 versetzt angeordneten Detektoren 22, 23 unterschiedliche Intensitäten bei der Messung ergeben.

Figur 7 zeigt eine andere Ausgestaltung der Sensoreinrichtung 20, wobei die strukturierte Maßstabeinrichtung 30 beispielsweise ferromagnetisch ausgebildet ist und kein oder doch im Wesentlichen kein eigenes Magnetfeld bereitstellt. Hier ist die Außenform des ferromagnetischen Teils der Maßstabeinrichtung 30 mit einer regelmäßigen Struktur versehen, wobei in regelmäßigen und/oder vorbestimmten Abständen Spitzen 65 oder Zacken oder andere Vorsprünge oder Rücksprünge vorgesehen sind. Die Länge 34 eines Sensorabschnitts 33 ergibt sich hier aus dem Abstand zweier Spitzen 65 oder Zacken oder dergleichen. Um eine glatte Oberfläche zur Verfügung zu stellen, kann der Zwischenraum zwischen den Spitzen 65 mit einer Füllmasse 64 ausgefüllt sein.

Bei dieser Variante umfasst der Detektorkopf 21 vorzugsweise wiederum zwei Magnetfeldsensoren bzw. Detektoren 22 und 23. Zusätzlich ist eine Magnetfelderzeugungseinrichtung 26 in Form von zum Beispiel einem Permanentmagneten vorgesehen. Das Magnetfeld der Magnetfelderzeugungseinrichtung 26 wird durch die Struktur 32 der Maßstabeinrichtung 30 beeinflusst bzw. "verbogen", sodass auch hier in Abhängigkeit von der Position der einzelnen Detektoren 22 und 23 sich unterschiedliche Feldstärken des Magnetfeldes der Magnetfelderzeugungseinrichtung 26 ergeben, die von den Detektoren 22, 23 erfasst werden. Auch hier können die Detektoren 22, 23 beispielsweise als elektrische Spulen oder Hallsensoren oder dergleichen ausgeführt sein.

An dieser Stelle sei angemerkt, dass in allen Ausgestaltungen und Ausführungsbeispielen die Struktur 32 der Maßstabeinrichtung 30 nicht unbedingt gleiche Längen 34 der Sensorabschnitte 33 aufweisen muss. Möglich ist es auch, dass ein Teil der Sensorabschnitte 33 beispielsweise in einem Abschnitt 63 kürzere (oder längere) Sensorabschnitte aufweist. Möglich ist es auch, dass jeder einzelne Sensorabschnitt 33 eine unterschiedliche Länge aufweist. Unterschiedliche Längen der Sensorabschnitte 33 können beispielsweise sinnvoll sein, um in der Nähe eines Endpunktes automatisch eine höhere Auflösung zu bewirken. Umgekehrt kann in anderen Bereichen ein größerer Abstand bzw. größere Länge eines Sensorabschnitts 33 vorgesehen sein, um die Sensoreinrichtung 20 dort unempfindlicher auszuführen.

Eine bevorzugte Ausführung sieht vor, die Maßstabeinrichtung 30 derart zu gestalten, das in Bewegungsrichtung 18 zwei oder mehr parallele Bahnen verlaufen, die wie einzelne Maßstäbe wirken. Dabei müssen einzelne Maßstäbe nicht über die ganze Bewegungslänge gleichförmig wirken, beispielsweise bei Verwendung als Index an den Enden.

Der Detektorkopf 30 wird dann dementsprechend gestaltet und weist zumindest einen zusätzlichen Detektor 22 auf.

Dabei kann durch Verwendung von zwei oder mehr Bahnen in der Maßstabeinrichtung 30 die Position des Detektorkopfs 30 auch absolut bestimmt werden: entweder durch digitale Codierung oder auch zwei Bahnen mit zueinander unterschiedlichen Längen der jeweiligen Sensorabschnitte 33, ähnlich dem Nonius bei Schiebelehren.

Figur 8 zeigt noch eine Ausgestaltung einer Sensoreinrichtung 20, bei der die Maßstabeinrichtung 30 hier keine magnetischen Teile aufweist. Die Maßstabeinrichtung 30 verfügt wieder über eine Struktur 32, wobei hier in periodischen Abständen Leiter 66 in ein an sich nicht-leitendes Material bzw. einen Nicht-Leiter 67 eingefügt sind. Auch hier wird eine Länge 34 eines Sensorabschnitts 33 durch den Abstand zweier Leiter 66 bestimmt.

Der Detektorkopf 21 verfügt in diesem Ausführungsbeispiel über eine Magnetfelderzeugungseinrichtung 26, die dazu ausgebildet ist, ein magnetisches Wechselfeld zur Verfügung zu stellen. Weiterhin weist der Detektorkopf wenigstens einen Detektor und insbesondere wenigstens zwei Detektoren 22, 23 auf, die wiederum zur Erfassung von Magnetfeldern bzw. der Intensität von Magnetfeldern dienen.

Bei der Sensoreinrichtung 20 im Ausführungsbeispiel gemäß Figur 8 erzeugt die Magnetfelderzeugungseinrichtung 26 ein insbesondere hochfrequentes magnetisches Wechselfeld. Dadurch werden in den Leitern 66 Wirbelströme erzeugt, die in den Leitern 66 wiederum Magnetfelder induzieren, die dem erregenden Magnetfeld entgegen gerichtet sind. Dadurch wird das Magnetfeld aus den Leitern 66 verdrängt und zwischen den Leitern 66 verstärkt, sodass in der Darstellung gemäß Figur 8 der Detektor 23 ein stärkeres Signal erhält als der Detektor 22. Bei einer weiteren Relativverschiebung des Detektorkopfs 21 relativ zu der Maßstabeinrichtung 30 ändern sich positionsabhängig die magnetischen Verhältnisse, sodass über die Signale der Detektoren 22, 23 die Position 19 abgeleitet werden kann. Außerdem kann auch auf die Bewegungsrichtung 18 zurückgeschlossen werden.

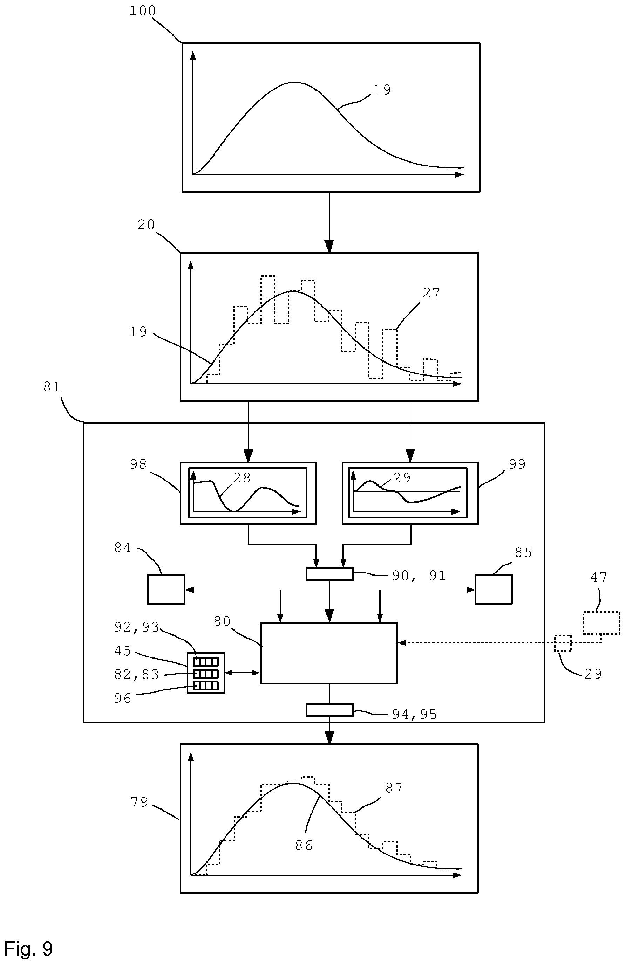

Die mittels der Sensoreinrichtung 20 ermittelten Messwerte werden gemäß dem in Figur 9 dargestellten Ablauf aufbereitet, um wenigstens ein Stoßdämpfer 100 damit zu steuern.

Der Stoßdämpfer 100 federt bei Stößen ein, sodass sich die Position 19 der Anschlusseinheiten 101, 102 relativ zueinander entsprechend ändert. Die Sensoreinrichtung 20 arbeitet primär als Wegsensor und leitet aus dem zeitlichen Verlauf der Position 19 einen entsprechenden Signalverlauf der Sensorsignale 27 ab. Dabei wird das Signal digitalisiert und erfährt schon dadurch ein Digitalisierungsrauschen. Weiterhin können auch andere Effekte zur Entstehung und/oder Erhöhung des Rauschens beitragen. Eine ungeeignete Filterung kann das Rauschen auch verstärken. Deshalb ist ein geeigneter Algorithmus wichtig.

Nach der Erfassung des Wegsignals 27 wird in einer Recheneinheit 98 zur Ermittlung des Geschwindigkeitssignals 28 dessen Wegsignal 27 differenziert. Zusätzlich kann in einer Recheneinheit 99 zur Ermittlung eines Beschleunigungssignals 29 entweder das Wegsignal 27 zweimal abgeleitet werden oder es wird das Geschwindigkeitssignal 28 einmal abgeleitet, um das Beschleunigungssignal 29 zu erhalten.

Das Geschwindigkeitssignal 28 und das Beschleunigungsssignal 29 bilden zusammen einen Messwertdatensatz 90 bzw. beim nächsten Durchlauf einen Messwertdatensatz 91. Die Messwertdatensätze werden einer Filtereinrichtung 80 zugeführt und können direkt in einer Speichereinrichtung 45 abgelegt werden. In der Filtereinrichtung 80 werden die Messwertdatensätze 90, 91 nacheinander analysiert. In Abhängigkeit von den Werten eines Messwertdatensatzes 90 wird ein entsprechender Filterparametersatz 82 oder 83 etc. ausgewählt oder abgeleitet und es wird über einen geeigneten Filteralgorithmus aus dem Messwertdatensatz 90 mit dem entsprechend bestimmten Filterparametersatz 82, 83 ein Steuerdatensatz 94 abgeleitet.

Es ist möglich und bevorzugt, dass bei einem Messdatensatz 91 der Filterparametersatz mit dem vorhergehenden Messdatensatz 90 bestimmt wird, da aufgrund der hohen Messfrequenz davon ausgegangen wird, dass sich von einem Messdatensatz zum nächsten Messdatensatz die Werte nicht so viel verändern, dass eine Neubestimmung eines Filterparametersatzes nötig ist.

Möglich und bevorzugt ist es aber auch, dass ein Messdatensatz 91 aufbereitet oder direkt und unaufbereitet in der Speichereinrichtung 45 als hinterlegter Datensatz 93 gespeichert wird. Mit dem nun hinterlegten Datensatz 93 kann ein Filterparametersatz 82, 83 ausgewählt werden. Mit dem Filterparametersatz kann mit dem entsprechenden Filter, beispielsweise einem Kalman-Filter 84 oder einem Mittelwertbilder 85 oder einem anderen Filteralgorithmus oder mit anderen Filtereinrichtungen ein entsprechender Steuerdatensatz 95 berechnet werden.

Nach der Berechnung des Steuerdatensatzes 95 kann iterativ überprüft werden, ob der zugehörige Filterparametersatz der richtige Filterparametersatz war. In jedem Fall oder in manchen Fällen oder bei Überschreitung gewisser Abweichungen kann eine erneute Ermittlung eines geeigneten Filterparametersatzes durchgeführt werden, um damit dann anschließend wieder den aktuellen Steuerdatensatz 95 abzuleiten. Eine solche Iteration kann einmal erfolgen oder mehrmals durchgeführt werden und kann auf eine maximale Anzahl von Durchläufen begrenzt werden.

Zusätzlich kann der Filtereinrichtung auch ein Beschleunigungsssignal 29 eines separaten Beschleunigungssensors 47 zugeführt werden. Damit kann auch die Beschleunigung des Zweirades insgesamt berücksichtigt werden.

Bei der Bestimmung eines geeigneten Filterparametersatzes 82, 83 ist es möglich, dass zwei oder mehr unterschiedliche Filterparametersätze 82, 83 vorgesehen sind, wobei die Auswahl eines Filterparametersatzes 82, 83 vorzugsweise danach erfolgt, ob das Geschwindigkeitssignal eine bestimmte Größe überschreitet oder nicht. Zusätzlich kann und wird besonders bevorzugt auch das Beschleunigungssignal herangezogen, um über einen geeigneten Filterparametersatz zu entscheiden.

Im Ausführungsbeispiel werden sowohl das Geschwindigkeitssignal als auch das Beschleunigungssignal zur Auswahl eines geeigneten Filterparametersatzes herangezogen.

In einfachen Fällen erfolgt eine Filterung über eine Mittelwertbildung, wobei unterschiedliche Filterparametersätze sich dadurch unterscheiden können, dass die Anzahl der berücksichtigten Messwerte variiert wird. Liegen beispielsweise kleine Geschwindigkeiten und kleine Beschleunigungswerte vor, können mehr Messwerte aus der Vergangenheit mit berücksichtigt werden als bei hohen Geschwindigkeiten oder hohen Beschleunigungen, da ansonsten bei hohen Geschwindigkeiten und hohen Beschleunigungen ein deutlicher und gegebenenfalls schädlicher Verzug bei der Reaktion des Stoßdämpfers 100 auftreten kann. Umgekehrt bewirkt eine stärkere Glättung von Messwerten bei kleinen Geschwindigkeiten und kleinen Beschleunigungen eine stärkere Herausfilterung von Digitalisierungsrauschen, wodurch das Ansprechverhalten auch bei kleinen und kleinsten Stößen sauber bleibt.

Zum Abschluss ist in Figur 9 ein Diagramm 79 dargestellt bei dem die reale Geschwindigkeit 86 und die zur Steuerung verwendete Geschwindigkeit 87 schematisch aufgetragen sind. Durch die Analyse der Messwerte und entsprechende Berücksichtigung eines Filterparametersatzes sind die Abweichungen zwischen den Kurven gering.

Besonders bevorzugt wird in allen Ausgestaltungen ein Kalman-Filter eingesetzt. Die Filterparametersatz wird bei dem bevorzugten Kalman-Filter wie folgt bestimmt:

Der Filteralgorithmus bekommt hier die (verrauschte) gemessene Geschwindigkeit "Vr" und die (verrauschte) gemessene Beschleunigung "Ar" der Anschlusseinheiten zueinander übergeben. Die Werte für Vr und Ar werden von der Sensoreinrichtung 20 gemessen bzw. daraus abgeleitet. Das Geschwindigkeitssignal und das Beschleunigungssignal können aus dem Sensorsignal abgeleitet werden. Das Beschleunigungssignal kann auch über einen separaten Beschleunigungssensor 47 direkt ermittelt werden.

Mit dem Kalman-Filter werden daraus die geschätzte bzw. abgeleitete Geschwindigkeit "Vg" (Bezugszeichen 87) und gegebenenfalls die geschätzte Beschleunigung "Ag" der Relativbewegung der Anschlusseinheiten bestimmt. Hier werden die Werte Vr und Ar in SI-Einheiten und folglich in "m/s" bzw. in "m/s2" angegeben.

Zunächst werden Variablen "Q0" und "R" und "Vg" und "P" definiert. Beim ersten Durchlauf des Filteralgorithmus werden Startwerte definiert, hier werden vorzugsweise Q0=0,01 und R=5 und Vg=0 und P=1 gesetzt. Vg entspricht der geschätzten bzw. abgeleiteten Geschwindigkeit 87 der Relativbewegung der Anschlusseinheiten zueinander, die für die Bestimmung der Dämpfung verwendet wird.

Anschließend werden bei jedem Durchlauf der Filterparametersatz bestimmt und es werden Werte für Q, Pp, K, Vg und P bestimmt. Die Parameter des Filterparametersatzes 82, 83 hängen von den gemessenen (verrauschten) Werten ab. Dazu wird unterschieden, ob der mathematische Betrag der (verrauscht) gemessenen Beschleunigung "Ar" größer als ein vorgegebener Schwellwert, hier vorzugsweise 5, beträgt. Die im vorherigen Durchlauf geschätzte bzw. abgeleitete Geschwindigkeit "Vg" (aus dem hinterlegten Datensatz 92) wird als Wert Vp definiert durch Vp=Vg (aus der letzten Schleife).

Außerdem wird bestimmt, ob der mathematische Betrag des Wertes Vp (geschätzte Geschwindigkeit Vg der Relativbewegung der Anschlusseinheiten zueinander im letzten Durchlauf) größer als ein weiterer Schwellwert, hier vorzugsweise 0,1 beträgt.

Falls auch nur eine der Bedingungen zutrifft wird der Parameter "Q" auf einen vordefinierten Wert, hier Q=2, gesetzt. Falls keine Bedingung zutrifft, wird Q auf einen anderen vordefinierten Wert, nämlich hier Q=Q0 und somit Q=0,01 gesetzt.

Danach werden Werte Pp, K, Vg und P zu

$$Pp = P + Q.$$

$$K = Pp * 1/(Pp + R)$$

$$Vg = Vp + K * (Vr - Vp)$$

$$P = (1 - K) * Pp$$

ermittelt.

Als Ergebnis des Filteralgorithmus bzw. der Filterfunktion wird eine geschätzte Geschwindigkeit "Vg" (Bezugszeichen 87 in Fig. 8) zurückgegeben. Es kann auch eine geschätzte Beschleunigung "Ag" ermittelt und zurückgegeben werden. Die Filterparameter und berechneten Werte werden wenigstens bis zum nächsten Durchgang als Filterparametersatz 83 gespeichert. Beim nächsten Durchlauf wird der Filterparametersatz 83 zum Filterparametersatz 82.

Die Geschwindigkeit 87 wird dann zur Steuerung verwendet.

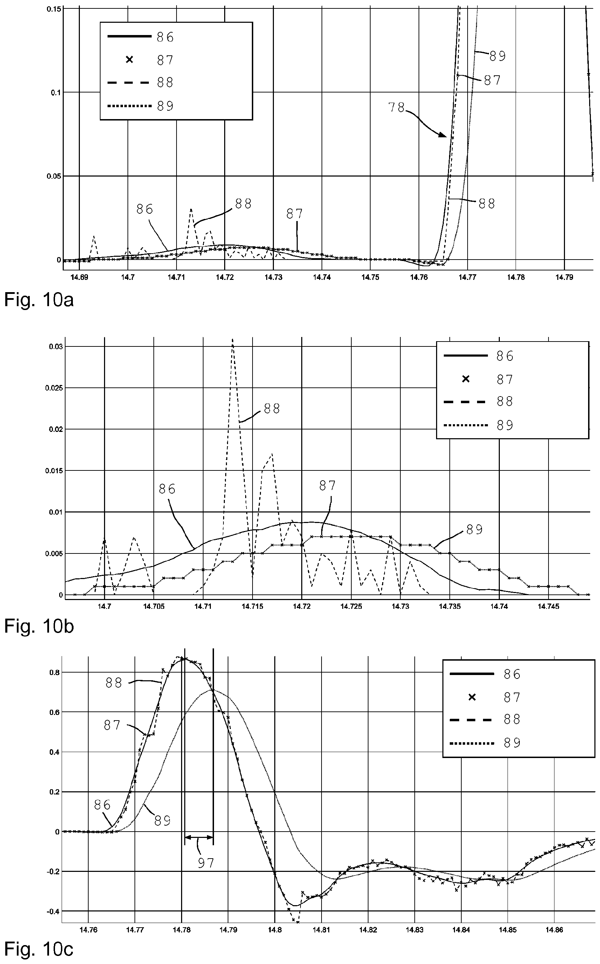

In den Figuren 10a bis 10c sind schließlich reale Werte aufgetragen, die mit dem Stoßdämpfer gemäß Figur 4 aufgezeichnet wurden.

Dabei zeigt Figur 10a den zeitlichen Ablauf über etwas mehr als eine Zehntelsekunde, innerhalb der zunächst nur sehr kleine Geschwindigkeiten vorliegen, während gegen Ende des abgebildeten Zeitraums ein größerer Stoß erfolgt.

Durchgezogen eingezeichnet ist die reale Geschwindigkeit 86, die auch über zusätzliche Sensoren ermittelt wurde und die nach der Messung nachträglich aufwendig ermittelt wurde. Im normalen Fahrbetrieb steht die reale Geschwindigkeit 86 in der Messqualität zur Steuerung nicht zur Verfügung. Die reale Geschwindigkeit 86 ist hier nur zum Vergleich abgebildet.

Die gestrichelte Linie 88 zeigt die mit einem ersten Filterparametersatz 82 gefilterte Geschwindigkeit 88, die zu Beginn des dargestellten Messzeitraums erheblich von der realen Geschwindigkeit 86 abweicht.

Die punktierte Linie 89 zeigt den Geschwindigkeitsverlauf, der mit einem zweiten Filterparametersatz 83 mit stärkerer Filterung ermittelt wurde. Zu Beginn des Messzeitraumes zeigt die Kurve 89 einen erheblich glatteren Verlauf als die gestrichelt dargestellte Kurve 88. Die Abweichungen von dem Verlauf der realen Geschwindigkeit 86 sind relativ gering. Erkennbar ist zwar ein leichter Zeitversatz, aber dieser spielt bei diesen kleinen Stößen keine Rolle.

Mit dem mit Beginn eines stärkeren Stoßes bei etwa 14,76 Sekunden steigt der Verlauf der realen Geschwindigkeit 86 sehr steil an. Die gestrichelte Kurve 88 folgt dem realen Geschwindigkeitsverlauf 86 praktisch verzögerungsfrei, während die punktierte Linie 89 einen deutlichen Zeitversatz aufweist.

Durch die Kriterien der Analyse der Messwerte wird hier bei der Verarbeitung der Messwerte eine Umschaltung der Filterparametersätze vorgenommen, wobei bis etwa 14,765 Sekunden für die Steuerung der punktierte Kurvenverlauf 89 genommen wird und bei dem ab etwa 14,765 Sekunden von der Kurve 89 auf die Kurve 88 umgeschaltet wird. Der Umschaltzeitpunkt 78 ist eingezeichnet. Zu diesem Zeitpunkt hat die gemessene Geschwindigkeit und/oder die gemessene Beschleunigung ein vorbestimmtes Maß überschritten, sodass ein anderer Filterparametersatz ausgewählt wird. In allen Fällen sind auch mehr als zwei Filterparametersätze möglich, beispielsweise einen mit geringer, ein mit mittlerer und einen mit stärkerer Filterung oder Glättung.

Mit den eingezeichneten Kreuzen 87 wird der Steuerungsverlauf abgebildet, wobei die Kreuze 87 zunächst auf der Kurve 89 (stärkere Glättung) und später auf der Kurve 88 (schwächere Glättung) liegen. So kann über den gesamten Messbereich eine ausreichende Übereinstimmung und hohe Genauigkeit erzielt werden.

In besonders einfachen Fällen kann z. B. eine stärkere Glättung eine einfache Mittelung der letzten fünf oder zehn Messwerte umfassen, während bei einer schwächeren Glättung nur die letzten zwei oder drei Werte gemittelt werden. Dabei kann die Stärke der Gewichtung von dem zeitlichen Abstand abhängen (Gewichtung zum Beispiel 25%, 50 und 100% für den vorletzten Messwert, den letzten Messwert und den aktuellen Wert).

Figur 10b zeigt den ersten Zeitabschnitt aus Figur 9 vergrößert, sodass die Abweichungen der Kurve 88 von dem realen Geschwindigkeitsverlauf 86 sehr deutlich sichtbar sind. Zum Zeitpunkt von etwa 14,713 Sekunden wird bei der Kurve 88 ein Geschwindigkeitswert ausgegeben der viermal so groß ist wie der tatsächlich real vorhandene Geschwindigkeitswert. Zu diesem Zeitpunkt ist eine Abweichung bei der Kurve 89 von der realen Geschwindigkeit 86 sehr viel geringer.

Figur 10c zeigt den Verlauf des stärkeren Stoßes am Ende des in Figur 10a dargestellten Zeitraums, wobei hier eine gute Übereinstimmung der Kurvenverläufe 88 und des realen Geschwindigkeitsverlaufs 86 erkennbar sind. Der Zeitversatz 97 zwischen dem Maximum des realen Geschwindigkeitsverlaufs 86 und dem Maximum der Kurve 89 beträgt weit mehr als 5 ms und ist für derartige Stöße zu groß, um optimale Dämpfungseigenschaften zur Verfügung zu stellen.

Insgesamt liefert die Erfindung durch eine Sensoreinrichtung 20 mit hoher Messauflösung und durch die Filterung der Messdaten, wobei die Filterparameter in Abhängigkeit von den Messdaten ausgewählt werden, in allen Leistungsbereichen der Stoßdämpfer 100 ein ausreichend schnelles und glattes und jeweils angepasstes Ansprechverhalten und somit eine verbesserte Fahrwerksteuerung 300.

### Bezugszeichenliste:

| | | | |
|---|---|---|---|
| 1 | Dämpfereinrichtung | 44 | Negativkammer |
| 2 | Dämpfergehäuse | 45 | Speichereinrichtung |
| 3 | erste Dämpferkammer | 46 | Steuereinrichtung |
| 4 | zweite Dämpferkammer | 47 | Beschleunigungssensor |
| 5 | Dämpfungskolben | 48 | Daten |
| 6 | Kolbenstange | 49 | Display, Anzeige |

(fortgesetzt)

| | | | |
|---|---|---|---|
| 7 | Dämpfungskanal, Strömungskanal | 50 | Dämpferkennlinie |
| 8 | Dämpfungsventil | 52 | Schritt |
| 9 | MRF | 53 | Internet |
| 10 | Dämpferkennlinie | 54 | Netzwerkschnittstelle |
| 11 | elektrische Spuleneinrichtung | 55 | Funknetzschnittstelle |
| 12 | Steuerkreislauf | 56 | Schritt |
| 13 | Sammelraum | 57 | Touchscreen, grafische Bedieneinheit |
| 14,15 | Strömungsöffnung | 58 | Halter |
| 16 | Durchgangsöffnung | 60 | Steuereinrichtung |
| 17 | Einwegventil | 61 | Batterieeinheit |
| 18 | Bewegungsrichtung- | 63 | Abschnitt |
| 19 | Position | 64 | Füllmasse |
| 20 | Sensoreinrichtung | 65 | Spitze |
| 21 | Detektorkopf | 66 | Leiter |
| 22,23 | Detektor | 67 | Isolator |
| 26 | Magnetfelderzeugungseinrichtung | 70 | Schritt |
| 27 | Sensorsignal | 71 | Ausgleichsraum |
| 28 | Geschwindigkeitssignal | 72 | Ausgleichskolben |
| 29 | Beschleunigungssignal | 73 | Halter |
| 30 | Maßstabeinrichtung | 75 | Kolbenstange |
| 31 | Messstrecke | 76 | Federgehäuse |
| 32 | Struktur | 77 | Deckel |
| 33 | Sensorabschnitt | 78 | Umschaltpunkt |
| 34 | Länge | 79 | Diagramm |
| 35 | Felderzeugungseinheit | 80 | Filtereinrichtung |
| 36 | Ringleiter | 81 | Analyseeinrichtung |
| 37 | Federungskolben | 82,83 | Filterparametersatz |
| 38 | Kabel | 84 | Kalman-Filter |
| 39 | Positionsmarke | 85 | Mittelwertbilder |
| 40 | Dämpfungskolbeneinheit | 86 | reale Geschwindigkeit |
| 41 | Kern | 87 | verwendete Geschwindigkeit |
| 42 | Federeinrichtung | 88,89 | Geschwindigkeit |
| 43 | Positivkammer | 90,91 | Messdatensatz |
| | | 92,93 | hinterlegter Datensatz |
| 94,95 | Steuerdatensatz | 263 | Steuerventil |
| 96 | Grenzwertsatz | 265 | Leitung |
| 97 | Zeitversatz | 270 | Positivkammer |
| 98,99 | Recheneinheit | 271,272 | Teilkammer |
| 100 | Stoßdämpfer | 273 | Steuerventil |
| 101,102 | Anschlusseinheit | 280 | Negativkammer |
| 103 | Dämpferhub | 281,282 | Teilkammer |
| 111 | Rad, Vorderrad | 283 | Steuerventil |
| 112 | Rad, Hinterrad | 290 | Ausgleichseinrichtung |
| 113 | Rahmen | 291 | Ausgleichsstößel |
| 114 | Federgabel | 292 | Position |
| 115 | Hinterraddämpfer | 293 | Ausgleichsventil |
| 116 | Lenker | 294 | Kabel, Steuerleitung |
| 117 | Sattel | 297 | Anschlag |
| 120 | Trageinrichtung | 300 | Fahrwerksteuerung |
| 150 | Bedieneinrichtung | 401 | Fahrradkomponente |
| 151 | Betätigungseinrichtung | 408 | Erkennungseinrichtung |

(fortgesetzt)

| | | | |
|---|---|---|---|
| 152 | Einstelleinrichtung | 413 | Sendeeinheit |
| 153 | mechanische Eingabeeinheit | 418 | Speichereinrichtung |
| 154-156 | Bedienelement | 423 | Empfangseinheit |
| 160 | Smartphone | 424 | Ultraschallsensor |
| 161-162 | Bereich | 433 | Halteeinrichtung |
| 200 | Zweirad | 434 | Infrarotsensor |
| 260 | Federeinheit | 444 | Radarsensor |

**Patentansprüche**

1. Fahrwerksteuerung (300) für ein wenigstens teilweise muskelbetriebenes Zweirad (200) mit wenigstens einer Steuereinrichtung (46) und wenigstens einer Speichereinrichtung (45) und mit wenigstens einem steuerbaren Stoßdämpfer (100) umfassend zwei relativ zueinander bewegbare Anschlusseinheiten (101, 102), wobei wenigstens eine Sensoreinrichtung (20) zur Erfassung von Messdatensätzen (90, 91) wenigstens über eine Relativbewegung der Anschlusseinheiten (101, 102) zueinander vorgesehen ist und wobei zur Aufbereitung der Messdatensätze (90, 91) eine Filtereinrichtung (80) vorgesehen ist,
wobei die Sensoreinrichtung (20) zur Erfassung eines Wegsignals bei der Relativbewegung der Anschlusseinheiten (101, 102) zueinander mit einer Auflösung besser als 100 $\mu$m ausgebildet ist, wobei die Sensoreinrichtung (20) zur Erfassung des Wegsignals und mit einer Frequenz größer 1 kHz ausgebildet ist, wobei eine Mehrzahl von Messdatensätzen (90, 91) in der Speichereinrichtung (45) hinterlegbar ist, wobei wenigstens ein aus einem mit der Sensoreinrichtung (20) bei der Relativbewegung der relativ zueinander bewegbaren Anschlusseinheiten (101, 102) erfassten Messdatensatz (90, 91) abgeleiteter Datensatz (92, 93) in der Speichereinrichtung (45) hinterlegt wird, und wobei eine Analyseeinrichtung (81) vorgesehen ist, welche dazu ausgebildet und eingerichtet ist, wenigstens einen hinterlegten abgeleiteten Datensatz (92, 93) zu analysieren,
**dadurch gekennzeichnet,**
**dass** in der Speichereinrichtung (45) eine Mehrzahl an Filterparametersätzen (82, 83) hinterlegt ist und dass die Analyseeinrichtung (81) dazu ausgebildet und eingerichtet ist, in Abhängigkeit von dem Ergebnis der Analyse einen Filterparametersatz (82, 83) aus der Mehrzahl an Filterparametersätzen (82, 83) zu bestimmen und mit dem bestimmten Filterparametersatz (82, 83) aus dem hinterlegten Messdatensatz (90, 91) einen Steuerdatensatz (94, 95) abzuleiten, sodass die Steuereinrichtung (46) mit dem Steuerdatensatz (94, 95) den Stoßdämpfer (100) steuert.

2. Fahrwerksteuerung (300) nach Anspruch 1, wobei die Analyseeinrichtung (81) eine Vergleichseinrichtung umfasst und wobei die Vergleichseinrichtung wenigstens einen hinterlegten Messdatensatz (90, 91) mit Vergleichsdaten vergleicht und in Abhängigkeit von dem Ergebnis des Vergleichs einen in der Speichereinrichtung (45) abgelegten Filterparametersatz (82, 83) auswählt und aus dem Messdatensatz (90, 91) einen Steuerdatensatz (95) ableitet.

3. Fahrwerksteuerung (300) nach einem der vorhergehenden Ansprüche, wobei die Steuereinrichtung (46) dazu ausgebildet ist, aus einem Sensorsignal (27) ein Geschwindigkeitssignal (28) und ein Beschleunigungssignal (29) für eine Relativbewegung der Anschlusseinheiten (101, 102) abzuleiten.

4. Fahrwerksteuerung (300) nach einem der vorhergehenden Ansprüche, wobei die Steuereinrichtung (46) dazu ausgebildet ist,
bei betragsmäßig geringen Geschwindigkeitssignalen und Beschleunigungssignalen (29) einen Filterparametersatz mit stärkerer Filterung
und bei betragsmäßig größeren Geschwindigkeitssignalen oder Beschleunigungssignalen (29) einen Filterparametersatz mit geringerer Filterung auszuwählen.

5. Verfahren zur Steuerung wenigstens eines Teils eines Fahrwerks eines wenigstens teilweise muskelbetriebenen Zweirads (200) gemäß einem der vorhergehenden Ansprüche mit wenigstens einer Steuereinrichtung (46) und wenigstens einer Speichereinrichtung (45) und mit wenigstens einem steuerbaren Stoßdämpfer (100) umfassend zwei relativ zueinander bewegbare Anschlusseinheiten (101, 102), wobei Messdatensätze (90, 91) über eine Relativbewegung der Anschlusseinheiten (101, 102) zueinander erfasst und mit einer Filtereinrichtung (80) aufbereitet werden,
wobei die Sensoreinrichtung (20) ein Wegsignal über eine Relativbewegung der Anschlusseinheiten (101, 102) zueinander mit einer Auflösung besser als 100 μm mit einer Frequenz größer 1 kHz erfasst und eine Mehrzahl von Messdatensätzen (90, 91) in der Speichereinrichtung (45) hinterlegt, wobei aus einem erfassten Messdatensatz (90) ein Datensatz (92) abgeleitet und in einer Speichereinrichtung (45) hinterlegt wird, und wobei wenigstens ein hinterlegter abgeleiteter Datensatz (92, 93) analysiert wird und in Abhängigkeit von dem Ergebnis der Analyse ein Filterparametersatz (82, 83) aus einer Mehrzahl von in der Speichereinrichtung (45) hinterlegten Filterparametersätzen (82, 83) bestimmt wird und mit dem bestimmten Filterparametersatz (82, 83) aus dem Messdatensatz (90, 91) ein Steuerdatensatz (94, 95) abgeleitet wird, sodass mit dem Steuerdatensatz (94, 95) der Stoßdämpfer (100) gesteuert wird.

6. Verfahren nach dem vorhergehenden Anspruch, wobei aus dem Messdatensatz (90, 91) Geschwindigkeitssignale (28) und Beschleunigungssignale (29) abgeleitet werden.

7. Verfahren nach einem der beiden vorhergehenden Ansprüche, wobei ein Messdatensatz (90, 91) stärker gefiltert wird, wenn der Betrag der Werte des Messdatensatzes (90, 91) kleiner ist als wenn der Betrag der Werte des Messdatensatzes (90, 91) größer ist.

8. Verfahren nach dem vorhergehenden Anspruch, wobei bei geringen Geschwindigkeitssignalen stärker gefiltert wird als bei hohen Geschwindigkeitssignalen und wobei bei geringen Beschleunigungssignalen stärker gefiltert wird als bei hohen Beschleunigungssignalen.

9. Verfahren nach einem der vier vorhergehenden Ansprüche, wobei mehrere nacheinander erfasste Messdatensätze (90, 91) gespeichert werden.

10. Verfahren nach einem der fünf vorhergehenden Ansprüche, wobei der Steuerdatensatz (94, 95) über eine Glättung mehrerer hinterlegter abgeleiteter Datensätze (92, 93) ermittelt wird.

11. Verfahren nach einem der sechs vorhergehenden Ansprüche, wobei eine Stärke der Glättung von dem hinterlegten Messdatensatz (90, 91) abhängt.

12. Verfahren nach einem der sieben vorhergehenden Ansprüche, wobei die Sensoreinrichtung (20) Messdatensätze (90, 91) mit einer Messfrequenz größer 1 kHz erfasst und/oder wobei die Steuereinrichtung (46) Steuerdatensätze (90, 91) mit einer Steuerfrequenz größer 1 kHz ermittelt und den Stoßdämpfer (100) wenigstens zeitweise mit wenigstens dieser Steuerfrequenz ansteuert.

13. Verfahren nach dem vorhergehenden Anspruch, wobei die Messfrequenz und/oder die Steuerfrequenz größer als 5 kHz beträgt und wobei die Messfrequenz kleiner als 50 kHz oder kleiner als 20 kHz beträgt.

14. Verfahren nach einem der drei vorhergehenden Ansprüche, wobei die Messfrequenz und die Steuerfrequenz wenigstens zeitweise größer als 8 kHz und die Auflösung der Wegsignale wenigstens zeitweise kleiner als 5 μm beträgt.

## Claims

1. Suspension control (300) for an at least partially muscle-powered two-wheeled vehicle (200) having at least one control device (46) and at least one memory device (45) and having at least one controllable shock absorber (100) comprising two connecting units (101, 102) movable relative to one another, wherein at least one sensor device (20) is provided for sensing measurement data sets (90, 91) at least by way of relative motion of the connecting units (101, 102) to one another and wherein a filtering device (80) is provided for processing the measurement data sets (90, 91),
wherein the sensor device (20) is configured to sense a displacement signal during relative motion of the connecting units (101, 102) to one another and is configured showing a resolution of better than 100 μm, wherein the sensor device (20) is configured to sense the displacement signal and shows a frequency higher than 1 kHz wherein a plurality of measurement data sets (90, 91) can be stored in the memory device (45), wherein at least one measurement data set (92, 93) is stored in the memory device (45) that is derived from a measurement data set (90, 91) sensed by the sensor device (20) during relative motion of the connecting units (101, 102) which are movable relative to one another, and wherein an analyzer (81) is provided which is configured and set up to analyze at least one stored derived data set (92, 93),
**characterized in**

**that** a plurality of filter parameter sets (82, 83) is stored in the memory device (45) and that the analyzer (81) is configured and set up to determine in dependence on the analysis result a filter parameter set (82, 83) from the plurality of filter parameter sets (82, 83) and to derive a control data set (94, 95) from the stored measurement data set (90, 91) by means of the filter parameter set (82, 83) so that the control device (46) controls the shock absorber (100) by means of the control data set (94, 95).

2. The suspension control (300) according to claim 1 wherein the analyzer (81) comprises a comparator and wherein the comparator compares at least one stored data set (90, 91) against comparison data and in dependence on the comparison result selects a filter parameter set (82, 83) stored in the memory device (45) and derives a control data set (95) from the measurement data set (90, 91).

3. The suspension control (300) according to any of the preceding claims wherein the control device (46) is configured to derive from a sensor signal (27) a speed signal (29) and an acceleration signal (29) for a relative motion of the connecting units (101, 102).

4. The suspension control (300) according to any of the preceding claims wherein the control device (46) is configured to select a filter parameter set showing stronger filtering in the case of low value speed signals and acceleration signals (29) and a filter parameter set showing weaker filtering in the case of higher value speed signals or acceleration signals (29).

5. Method for controlling at least part of a suspension of an at least partially muscle-powered two-wheeled vehicle (200) according to any of the preceding claims having at least one control device (46) and at least one memory device (45) and at least one controllable shock absorber (100) comprising two connecting units (101, 102) movable relative to one another wherein measurement data sets (90, 91) are sensed by way of relative motion of the connecting units (101, 102) to one another and are processed by means of a filtering device (80), wherein the sensor device (20) senses a displacement signal through relative motion of the connecting units (101, 102) to one another showing a resolution of better than 100 $\mu$m at a frequency of above 1 kHz and stores a plurality of measurement data sets (90, 91) in the memory device (45), wherein a data set (92) is derived from a sensed measurement data set (90) and stored in a memory device (45), and
wherein at least one stored, derived data set (92, 93) is analyzed and in dependence on the analysis result a filter parameter set (82, 83) is determined from a plurality of filter parameter sets (82, 83) stored in the memory device (45) and a control data set (94, 95) is derived from the measurement data set (90, 91) by means of the determined filter parameter set (82, 83) so that the shock absorber (100) is controlled by means of the control data set (94, 95).

6. The method according to the preceding claim wherein speed signals (28) and acceleration signals (29) are derived from the measurement data set (90, 91).

7. The method according to any of the two preceding claims wherein a measurement data set (90, 91) is filtered more strongly if the amount of the values of the measurement data set (90, 91) is smaller than if the amount of the values of the measurement data set (90, 91) is larger.

8. The method according to the preceding claim wherein filtering is stronger with low speed signals than with high speed signals and wherein filtering is stronger with low acceleration signals than with high acceleration signals.

9. The method according to any of the four preceding claims wherein multiple measurement data sets (90, 91) sensed successively are stored.

10. The method according to any of the five preceding claims wherein the control data set 94, 95) is obtained by way of smoothing multiple stored derived data sets (92, 93).

11. The method according to any of the six preceding claims wherein a strength of smoothing depends on the stored measurement data set (90, 91).

12. The method according to any of the seven preceding claims wherein the sensor device (20) senses measurement data sets (90, 91) at a measuring frequency higher than 1 kHz and/or wherein the control device (46) obtains control data sets (90, 91) at a control frequency higher than 1 kHz and controls the shock absorber (100) at least temporarily at least at this control frequency.

**13.** The method according to the preceding claim wherein the measuring frequency and/or the control frequency is higher than 5 kHz and wherein the measuring frequency is lower than 50 kHz or lower than 20 kHz.

**14.** The method according to any of the three preceding claims wherein the measuring frequency and the control frequency are at least temporarily higher than 8 kHz and the resolution of the displacement signals is at least temporarily smaller than 5 μm.

**Revendications**

**1.** Commande de châssis (300) pour un deux roues (200) entraîné au moins partiellement par force musculaire, dotée d'au moins un organe de commande (46) et d'au moins un dispositif mémoire (45) et dotée d'au moins un absorbeur de choc (100) susceptible d'être commandé, comprenant deux unités de connexion (101, 102) mobiles l'une par rapport à l'autre, au moins un capteur (20) étant prévu pour détecter des ensembles de données de mesure (90, 91) par le biais d'au moins un mouvement relatif des unités de connexion (101, 102) les unes par rapport aux autres et un organe de filtrage (80) étant prévu pour traiter les ensembles de données de mesure (90, 91),
le capteur (20) destiné à la détection d'un signal de déplacement lors du mouvement relatif des unités de connexion (101, 102) les unes par rapport aux autres étant conçu avec une résolution supérieure à 100 μm, le capteur (20) étant conçu pour détecter le signal de déplacement et d'une fréquence supérieure à 1 kHz, une pluralité d'ensembles de données de mesure (90, 91) étant susceptibles d'être mémorisés dans le dispositif mémoire (45), au moins un ensemble de données (92, 93) déduit d'un ensemble de données de mesure (90, 91) détecté par le capteur (20) lors du mouvement relatif des unités de connexion (101, 102) mobiles les unes par rapport aux autres étant mémorisé dans le dispositif mémoire (45), et un moyen d'analyse (81) étant prévu, lequel est conçu et mis au point pour analyser au moins un ensemble de données (92, 93) déduit mémorisé,
**caractérisée en ce**
**qu'**une pluralité d'ensembles de paramètres de filtres (82, 83) sont mémorisés dans le dispositif mémoire (45) et que le moyen d'analyse (81) est conçu et mis au point pour définir, en fonction du résultat de l'analyse, un ensemble de paramètres de filtre (82, 83) à partir de la pluralité d'ensembles de paramètres de filtre (82, 83) et pour déduire, avec l'ensemble de paramètres de filtre (82, 83) défini, un ensemble de données de commande (94, 95) de l'ensemble de données de mesure (90, 91) mémorisé, de telle sorte que l'organe de commande (46) doté de l'ensemble de données de commande (94, 95) commande l'absorbeur de choc (100).

**2.** Commande de châssis (300) selon la revendication 1, le moyen d'analyse (81) comprenant un dispositif comparateur et ledit dispositif comparateur comparant au moins un ensemble de données de mesure (90, 91) mémorisé à des données de comparaison et sélectionne, en fonction du résultat de la comparaison, un ensemble de paramètres de filtre (82, 83) mémorisé dans le dispositif mémoire (45), et déduit de l'ensemble de données de mesure (90, 91) un ensemble de données de commande (95).

**3.** Commande de châssis (300) selon l'une quelconque des revendications précédentes, l'organe de commande (46) étant conçu pour déduire d'un signal capteur (27) un signal de vitesse (28) et un signal d'accélération (29) pour un mouvement relatif des unités de connexion (101, 102).

**4.** Commande de châssis (300) selon l'une quelconque des revendications précédentes, l'organe de commande (46) étant conçu pour,
lorsque les signaux de vitesse et signaux d'accélération (29) sont d'un montant faible, choisir un ensemble de paramètres de filtre à filtration plus élevée
et, lorsque les signaux de vitesse ou signaux d'accélération (29) sont d'un montant plus élevé, sélectionner un ensemble de paramètres de filtre à filtration réduite.

**5.** Procédé de commande d'au moins une partie d'un châssis d'un deux roues (200) entraîné au moins partiellement par force musculaire, selon l'une quelconque des revendications précédentes, doté d'au moins un organe de commande (46) et au moins un dispositif mémoire (45) et doté d'au moins un absorbeur de choc (100) susceptible d'être commandé, comprenant deux unités de connexion (101, 102) mobiles l'une par rapport à l'autre, des ensembles de données de mesure (90, 91) étant détectés par un mouvement relatif des unités de connexion (101, 102) l'une par rapport à l'autre, et traités à l'aide d'un organe de filtrage (80),
le capteur (20) détectant un signal de déplacement par le biais d'un mouvement relatif des unités de connexion (101, 102) les unes par rapport aux autres à une résolution supérieure à 100 μm, à une fréquence supérieure à 1 kHz, et mémorisant une pluralité d'ensembles de données de mesure (90, 91) dans le dispositif mémoire (45), un ensemble de données (92) étant déduit d'un ensemble de données de mesure (90) détecté, et mémorisé dans un dispositif mémoire (45), et au moins un ensemble de données (92, 93) déduit et mémorisé étant analysé et un ensemble de paramètres de filtre (82, 83) étant défini, en fonction du résultat de l'analyse, à partir d'une pluralité d'ensembles de paramètres de filtre (82, 83) mémorisés dans le dispositif mémoire (45), et avec l'ensemble de paramètres de filtre (82, 83) défini, un ensemble de données de commande (94, 95) étant déduit de l'ensemble de données de mesure (90, 91) de telle sorte que l'absorbeur de choc (100) est commandé à l'aide de l'ensemble de données de commande (94, 95).

6. Procédé selon la revendication précédente, des signaux de vitesse (28) et des signaux d'accélération (29) étant déduits de l'ensemble de données de mesure (90, 91).

7. Procédé selon l'une quelconque des revendications précédentes, un ensemble de données de mesure (90, 91) étant, lorsque le montant des valeurs de l'ensemble de données de mesure (90, 91) est moins élevé, plus fortement filtré que lorsque le montant des valeurs de l'ensemble de données de mesure (90, 91) est plus élevé.

8. Procédé selon la revendication précédente, le filtrage étant plus important lorsque les signaux de vitesse sont faibles que lorsque les signaux de vitesse sont élevés, et le filtrage étant plus important lorsque les signaux d'accélération sont faibles que lorsque les signaux d'accélération sont élevés.

9. Procédé selon l'une quelconque des revendications précédentes, plusieurs ensembles de données de mesure (90, 91) détectés successivement étant enregistrés.

10. Procédé selon l'une quelconque des cinq revendications précédentes, l'ensemble des données de commande (94, 95) étant déterminé par le biais d'un lissage de plusieurs ensembles de données (92, 93) déduits et mémorisés.

11. Procédé selon l'une quelconque des six revendications précédentes, une importance du lissage dépendant de l'ensemble de données de mesure (90, 91) mémorisé.

12. Procédé selon l'une quelconque des sept revendications précédentes, le capteur (20) détectant des ensembles de données de mesure (90, 91) à une fréquence de mesure supérieure à 1 kHz et/ou l'organe de commande (46) déterminant des ensembles de données de commande (90, 91) à une fréquence de commande supérieure à 1 kHz et dirigeant l'absorbeur de choc (100) au moins temporairement à au moins cette fréquence de commande.

13. Procédé selon la revendication précédente, la fréquence de mesure et/ou la fréquence de commande étant supérieures à 5 kHz et la fréquence de mesure étant inférieure à 50 kHz ou inférieure à 20 kHz.

14. Procédé selon l'une quelconque des trois revendications précédentes, la fréquence de mesure et la fréquence de commande étant au moins temporairement supérieures à 8 kHz et la résolution des signaux de déplacement au moins temporairement inférieure à 5 $\mu$m.

Fig. 1

Fig. 2

Fig. 3a

Fig. 3b

Fig. 4

Fig. 5

Fig. 6

Fig. 7

Fig. 8

Fig. 9

Fig. 10a

Fig. 10b

Fig. 10c

**EP 3 109 144 B1**

**IN DER BESCHREIBUNG AUFGEFÜHRTE DOKUMENTE**

**In der Beschreibung aufgeführte Patentdokumente**

- DE 102012012532 A1
- DE 102013014091 A1